# EUROPÄISCHE PATENTSCHRIFT

(11) **EP 1 663 700 B1**
(45) Veröffentlichungstag und Bekanntmachung des Hinweises auf die Patenterteilung: **25.06.2008**
(21) Anmeldenummer: 04786207.3
(22) Anmeldetag: 27.08.2004
(51) Int. Cl.: B60N 2/12, B60N 2/08

(54) **MEMORY-EINRICHTUNG FÜR EINE SCHIENENLÄNGSFÜHRUNG EINES KRAFTFAHRZEUGSITZES**
MEMORY DEVICE FOR A RAIL LONGITUDINAL GUIDE FOR A MOTOR VEHICLE SEAT
DISPOSITIF A MEMOIRE POUR UNE GLISSIERE LONGITUDINALE D'UN SIEGE DE VEHICULE AUTOMOBILE

(30) Priorität: 09.09.2003 DE 20314237 U
(43) Veröffentlichungstag der Anmeldung: 07.06.2006
(73) Patentinhaber: Brose Fahrzeugteile GmbH & Co. KG, Coburg, 96450 Coburg (DE)
(72) Erfinder: BAUERSACHS, Andrea, 96237 Ebersdorf (DE); PRAUSE, Andreas, 96450 Coburg (DE); KRÖNER, Gregor, 96120 Bischberg (DE); SUCK, Wolfgang, 96450 Coburg (DE); MACHT, Alwin, 96250 Ebensfeld (DE)
(74) Vertreter: Baumgärtel, Gunnar
(86) Internationale Anmeldenummer: PCT/DE2004/001935
(87) Internationale Veröffentlichungsnummer: WO 2005/025927

(56) Entgegenhaltungen:
- WO-A2-00/55002
- DE-A1- 10 127 151
- DE-A1- 10 127 152
- DE-A1- 10 127 153
- DE-U- 20 210 895
- DE-U- 29 910 720
- FR-A5- 2 173 442

## Beschreibung

Die Erfindung betrifft eine Memory-Einrichtung für eine Schienenlängsführung eines Kraftfahrzeugsitzes nach dem Oberbegriff des Anspruchs 1.

Eine derartige Memory-Einrichtung ist vorgesehen zur Verwendung bei einer Schienenlängsführung, die zwei längserstreckte, in Erstreckungsrichtung relativ zueinander verschiebliche Führungsschienen aufweist, um die Sitzlängsposition eines Kraftfahrzeugsitzes einstellen zu können. Hierzu wird eine der beiden Führungsschienen karosseriefest am Fahrzeugboden eines Kraftfahrzeugs angeordnet und die zweite, hierzu verschiebliche Führungsschiene dient als Sitzschiene zur Aufnahme eines Kraftfahrzeugsitzes. Durch Verschieben der zweiten Schiene relativ zu der ersten, karosseriefesten Schiene lässt sich somit die Sitzlängsposition eines an der zweiten Führungsschiene angeordneten Kraftfahrzeugsitzes in Schienenlängsrichtung einstellen. Solche Schienenlängsführungen sind üblicherweise paarweise an beiden Längsseiten eines Kraftfahrzeugsitzes angeordnet.

Um nach einer Veränderung der Sitzlängsposition eines Kraftfahrzeugsitzes möglichst schnell und unkompliziert die vorhergehende Sitzlängsposition wieder auffinden zu können, ist es bekannt, eine Schienenlängsführung mit einer Memory-Einrichtung auszustatten, mittels der sich bestimmte Sitzlängspositionen als sogenannte Memory-Positionen speichern lassen. Hierzu umfasst die Memory-Einrichtung eine erste Memory-Baugruppe, die an einer der beiden Führungsschienen, insbesondere der karosseriefesten Führungsschiene, entlang deren Erstreckungsrichtung verschieblich angeordnet ist, um durch Verschieben der ersten Memory-Baugruppe eine bestimmte Memory-Position einstellen zu können. Ferner ist an der ersten Memory-Baugruppe eine Verriegelungsvorrichtung zum Verriegeln einer zuvor eingestellten Memory-Position vorgesehen. Dieser ersten Memory-Baugruppe an der einen Führungsschiene ist eine zweite Memory-Baugruppe an der anderen, zweiten Führungsschiene (insbesondere der Sitzschiene) zugeordnet, welche dort - bezüglich der Schienenlängsrichtung - ortsfest fixiert ist und einen Anschlag aufweist, der beim Erreichen einer der Memory-Position entsprechenden Sitzlängsposition der zweiten Führungsschiene mit einem Gegenanschlag der ersten Memory-Baugruppe in Eingriff tritt.

Mit anderen Worten ausgedrückt erlaubt eine Bewegung der ersten Memory-Baugruppe entlang einer ersten der beiden Führungsschienen (nämlich der karosseriefesten Führungsschiene) eine Auswahl einer bestimmten Memory-Position, die mittels einer Verriegelungsvorrichtung der ersten Memory-Baugruppe fixierbar ist. Diese Memory-Position entspricht einer bestimmten Sitzlängsposition, d. h. einer bestimmten Lage der beiden Führungsschienen zueinander (in Schienenlängsrichtung); und diese Memory-Position lässt sich dadurch auffinden, dass eine an der zweiten Führungsschiene (Sitzschiene) vorgesehene zweite Memory-Baugruppe einen Anschlag aufweist, der beim Erreichen der Memory-Position mit einem zugeordneten Gegenanschlag der ersten Memory-Baugruppe in Eingriff tritt.

Ein wichtiges Anwendungsgebiet derartiger Memory-Einrichtungen sind Kraftfahrzeugsitze mit einer sogenannten Easy-Entry-Funktion (Einstiegshilfe). Kraftfahrzeugsitze mit Easy-Entry-Funktion lassen sich aus einer aktuell eingestellten Sitzlängsposition heraus mit vorgeklappter Rückenlehne nach vorne verschieben, um einen Einstieg in das entsprechende Kraftfahrzeug hinter dem nach vorne verschobenen Fahrzeugsitz zu erleichtern. Die Ausstattung eines Fahrzeugsitzes mit einer Easy-Entry-Funktion ist üblich bei den Vordersitzen zweitüriger Kraftfahrzeuge.

Die Memory-Einrichtung dient bei einem Kraftfahrzeugsitz mit Easy-Entry-Funktion dazu, die vor der Vorverlagerung des Kraftfahrzeugsitzes mit vorgeklappter Rückenlehne eingestellte Sitzlängsposition, bei der es sich beispielsweise um die bevorzugte Sitzlängsposition des Fahrers handelt, beim Zurückschieben des Fahrzeugsitzes unmittelbar wieder auffinden zu können.

Ein aus der DE 101 27 152 A1 bekannter Kraftfahrzeugsitz dieser Art umfasst
- ein Sitzgestell,
- eine Rückenlehne, die schwenkbar an dem Sitzgestell gelagert ist und die aus ihrer Gebrauchsposition heraus in Richtung auf eine Sitzfläche des Sitzgestells vorklappbar ist,
- eine Schienenlängsführung, mit der das Sitzgestell zur Einstellung der Sitzlängsposition in Sitzlängsrichtung bewegbar ist,
- eine Feststellvorrichtung zum Arretieren des Sitzgestells in einer zuvor eingestellten Sitzlängsposition,
- ein Betätigungselement zum Entriegeln der Feststellvorrichtung, so dass das Sitzgestell in Sitzlängsrichtung bewegt werden kann,
- einen Koppelmechanismus, der auf das Betätigungselement einwirkt und die Feststellvorrichtung entriegelt, wenn die Rückenlehne in Richtung auf die Sitzfläche vorgeklappt ist,
- eine Memory-Einrichtung, mittels der das Sitzgestell bei einer Bewegung in Sitzlängsrichtung automatisch in einer einstellbaren, als Memory-Position definierten Sitzlängsposition angehalten werden kann,
- eine Verriegelungsvorrichtung der Memory-Einrichtung zum Verriegeln einer eingestellten Memory-Position sowie
- Mitteln, über die die Verriegelungsvorrichtung mit der Rückenlehne gekoppelt ist.

Durch die Kopplung der Verriegelungsvorrichtung der Memory-Einrichtung mit der Rückenlehne soll erreicht werden, dass bei einem Verschieben des Fahrzeugsitzes mit hochgeklappter Rückenlehne in eine neue Sitzlängsposition auch eine neue Memory-Position eingestellt werden kann, während bei einem Verschieben des Fahrzeugsitzes mit vorgeklappter Rückenlehne, welches der Ausübung der sogenannten Easy-Entry-Funktion dient, die vorherige Memory-Position für ein schnelles Wiederauffinden erhalten bleiben soll.

Aus der FR-A-21734425 ist ein Kraftfahrzeugsitz mit einer Memory-Einrichtung für eine Schienenlängsführung bekannt, die aus einer einzigen verschiebbaren Memory-Baugruppe besteht, dessen Grundkörper aus Kunststoff gefertigt ist.

Der Erfindung liegt das Problem zugrunde, eine Memory-Einrichtung für einen Kraftfahrzeugsitz der vorstehend genannten Art weiter zu verbessern.

Dieses Problem wird erfindungsgemäß durch die Schaffung einer Memory-Einrichtung mit den Merkmalen des Anspruchs 1 gelöst.

Danach weist die zweite Memory-Baugruppe einen aus Kunststoff bestehenden Grundkörper (bevorzugt in Form eines Kunststoffgehäuses) auf, über den sie an der zweiten Führungsschiene befestigt ist.

Die erfindungsgemäße Lösung beruht auf der Erkenntnis, dass trotz der erheblichen Kräfte, die an der zweiten Baugruppe der Memory-Einrichtung beim Anfahren einer Memory-Position wirken können, die Ausbildung des Grundkörpers der zweiten Memory-Baugruppe aus Kunststoff dennoch möglich ist, wenn die zweite Memory-Baugruppe geeignet gestaltet wird, wie nachfolgend bei der Erläuterung der abhängigen Ansprüche deutlich werden wird.

Die erfindungsgemäße Lösung hat den Vorteil, dass die zweite Memory-Baugruppe aus einem leichten Material (Kunststoff) besteht, welches zudem in der Formgebung gut handhabbar ist. Der aus Kunststoff bestehende Grundkörper bildet dabei insoweit die Basis der zweiten Memory-Baugruppe der Memory-Einrichtung, als die Befestigung dieser Baugruppe an der zugeordneten zweiten Führungsschiene der Schienenlängsführung über diesen Grundkörper erfolgt.

Der Grundkörper der zweiten Memory-Baugruppe weist dabei Betätigungselemente und/oder Betätigungsflächen zum Einwirken auf die Verriegelungsvorrichtung der ersten Memory-Baugruppe auf.

So kann der Grundkörper eine Führung für ein zur Betätigung der Verriegelungsvorrichtung der zweiten Baugruppe vorgesehenes Betätigungselement, insbesondere in Form eines Mitnehmers, aufweisen. Dieses Betätigungselement kann insbesondere ein Bestandteil einer Kopplungseinrichtung bilden, über die die Verriegelungsvorrichtung der ersten Memory-Baugruppe in der oben beschriebenen Weise mit der Rückenlehne eines Kraftfahrzeugsitzes gekoppelt wird.

Die Führung ist bevorzugt einstückig an dem Grundkörper angeformt und wird beispielsweise durch eine Durchgangsöffnung des Grundkörpers gebildet, die sich in Führungsrichtung des entsprechenden Betätigungselementes erstreckt. Ferner kann die Führung einen Hohlraum zur Aufnahme eines elastischen Elementes, insbesondere in Form einer Schraubenfeder, aufweisen, dass auf das in oder an der Führung angeordnetes, bewegliches (verschiebliches) Betätigungselement eine Vorspannung ausübt.

Bevorzugt weist der Grundkörper mindestens eine Führungsfläche auf, entlang der ein Element der Verriegelungsvorrichtung der ersten Memory-Baugruppe beim Anfahren der Memory-Position mit hochgeklappter Rückenlehne gleitet, z. B., um ein vorzeitiges Entriegeln der Verriegelungsvorrichtung durch das hierfür vorgesehene Betätigungselement der zweiten Memory-Baugruppe zu verhindern.

Der aus Kunststoff bestehende Grundkörper der zweiten Memory-Baugruppe ist bevorzugt für eine formschlüssige Befestigung an der zweiten Führungsschiene der Schienenlängsführung ausgebildet. Hierzu kann der Grundkörper einstückig angeformte Formschlusselemente (Rastmittel) aufweisen, die durch mindestens ein aufspreizbares Schnappelement gebildet werden, welches nach dem Einrasten in eine zugeordnete Rastöffnung der zweiten Führungsschiene (optional unter Verwendung eines Verriegelungsstiftes) derart aufgespreizt wird, dass eine formschlüssige, gegebenenfalls zusätzlich kraftschlüssig wirkende, Schnappverbindung hergestellt ist. Alternativ oder ergänzend kann eine Verbindung des Grundkörpers mit der zugeordneten zweiten Führungsschiene der Schienenlängsführung durch separate, nicht an dem Grundkörper angeformte Befestigungsmittel, z. B. durch eine Niet- oder eine Schraubverbindung, erfolgen.

Der Anschlag der zweiten Memory-Baugruppe, der beim Erreichen der Memory-Position mit einem zugeordneten Gegenanschlag der ersten Memory-Baugruppe in Eingriff tritt, wird durch ein separates, aus einem festen Material, nämlich Metall (insbesondere Blech), bestehendes Bauteil gebildet, welches mit dem aus Kunststoff bestehenden Grundkörper der zweiten Memory-Baugruppe verbunden ist. Die Verbindung erfolgt vorzugsweise form- und/oder kraftschlüssig über einen großflächigen Umgriff.

Die Memory-Einrichtung kann mit einer Feststellvorrichtung, die zur Arretierung der beiden Führungsschienen in einer zuvor eingestellten Sitzlängsposition dient, zu einer Sitzbaugruppe zusammengefasst werden, welche an einer Schienenlängsführung eines Kraftfahrzeugsitzes montiert wird und dabei zu einem Einbaumodul zusammengefasst werden kann, wie nachfolgend noch näher erläutert werden wird.

Die Feststellvorrichtung umfasst beweglich gelagerte Sperrelemente, insbesondere in Form von Sperrzähnen, die zum Arretieren der Schienenlängsführung in einer zuvor eingestellten Sitzlängsposition in eine Sperrposition bringbar sind, in der sie in zugeordnete Raststellen eingreifen. Dabei sind die Sperrelement regelmäßig in Richtung auf ihre Sperrposition elastisch vorgespannt, so dass der Fahrzeugsitz in einer jeweils angefahrenen Sitzlängsposition automatisch arretiert wird, wenn die Sperrelemente nicht aktiv (z. B. durch Vorklappen der Rückenlehne oder durch Betätigen eines hierdurch vorgesehenen Betätigungshebels) aus den zugeordneten Raststellen ausgehoben werden.

Die Feststellvorrichtung wird bevorzugt an der längsbeweglichen, als Sitzschiene ausgebildeten zweiten Führungsschiene angeordnet, während die zugeordneten Raststellen an der karosseriefesten ersten Schiene vorgesehen sind bzw. in einer separaten Rastschiene neben dieser verlaufen.

Zur Lagerung der Sperrelemente sollen gemäß einer besonders bevorzugten Weiterbildung der vorliegenden Erfindung die Sperrelemente an mindestens einem Lagerblech beweglich angeordnet sein. Dieses Lagerblech ersetzt die bisher üblichen Gusskörper zur Lagerung der Sperrelemente.

Mindestens eines der Lagerbleche kann darüber hinaus ergänzend zur Führung des am Grundkörper der Memory-Einrichtung beweglich gelagerten Betätigungselementes dienen, z. B. indem an dem entsprechenden Lagerblech eine Führungsöffnung in Form eines Durchzuges ausgebildet ist. Hierdurch wird die Führung des Betätigungselementes zusätzlich stabilisiert, da sie nicht mehr allein durch den aus Kunststoff bestehenden Grundkörper wahrgenommen wird.

Werden als Sperrelemente Sperrzähne verwendet, welche entlang ihrer Erstreckungsrichtung beweglich sind, um die beiden Führungsschienen arretieren bzw. entriegeln zu können, so eignen sich zu deren Lagerung insbesondere zwei in Verschieberichtung der Sperrelemente voneinander beabstandete Führungsbleche, welche jeweils Führungsöffnungen für die Sperrelemente aufweisen.

Die erfindungsgemäß ausgestaltete zweite Baugruppe der Memory-Einrichtung einerseits und die Feststellvorrichtung andererseits werden bevorzugt derart zueinander angeordnet, dass mindestens ein Lagerblech der Feststellvorrichtung, das den Anschlag bildende Bauteil der zweiten Memory-Baugruppe derart abstützt, dass beim Anfahren der Memory-Position am Anschlag auftretende Kräfte nicht in den aus Kunststoff bestehenden Grundkörper der zweiten Memory-Baugruppe, sondern vielmehr in jenes Lagerblech abgeleitet werden. Da die Lagerbleche der Feststellvorrichtung wiederum an einer der Führungsschienen befestigt sind, werden die beim Anfahren der Memory-Position auftretenden Kräfte letztlich von den Führungsschienen selbst aufgenommen, die ja schon aus Gründen der Crash-Sicherheit äußerst stabil ausgelegt sind und daher die entsprechenden Kräfte ohne weiteres kompensieren können.

Für eine besonders effektive Weiterleitung der beim Anfahren der Memory-Position auftretenden Kräfte von dem entsprechenden Lagerblech in die zugeordnete Führungsschiene sind an dem Lagerblech Stützbereiche vorgesehen, über die sich das Lagerblech an der Führungsschiene abstützt, und zwar zusätzlich zu den Befestigungsstellen zwischen Führungsschiene und Lagerblech.

Eines der Lagerbleche der Feststellvorrichtung nimmt dabei auch die Betätigungsmittel auf, die zur Betätigung der Sperrelemente der Feststellvorrichtung (entgegen der Wirkung der elastischen Vorspannung) dienen.

Ein Kraftfahrzeugsitz mit Easy-Entry-Funktion und einer erfindungsgemäßen Memory-Einrichtung ist durch die Merkmale des Anspruchs 32 charakterisiert.

Weitere Merkmale und Vorteile der Erfindung werden bei der nachfolgenden Beschreibung eines Ausführungsbeispiels anhand der Figuren deutlich werden.

Es zeigen:
- Fig. 1a und 1b: zwei unterschiedliche perspektivische Ansichten eines Einbaumoduls für eine Schienenlängsführung eines Kraftfahrzeugsitzes, welches eine Memory-Baugruppe sowie eine Feststellvorrichtung für die Schienenlängsführung umfasst;
- Fig. 2a und 2b: zwei perspektivische Ansichten der Memory-Baugruppe des Einbaumoduls aus den Figuren 1a und 1b;
- Fig. 3a und 3b: zwei Einzelteile der Memory-Baugruppe aus den Figuren 2a und 2b;
- Fig. 4a und 4b: die Feststellvorrichtung des Einbaumoduls aus den Figuren 1a und 1b, befestigt an einer Führungsschiene eines Kraftfahrzeugsitzes;
- Fig. 5a: eine perspektivische Darstellung von Teilen eines Sitzgestells mit einer Schienenlängsführung, mit einer Feststellvorrichtung der Schienenlängsführung sowie mit einer programmierbaren Memory-Einrichtung zum automatischen Auffinden einer vorgegebenen Sitzlängsposition, in einem Zustand, in dem die Rückenlehne des entsprechenden Sitzes sich in ihrer Gebrauchsposition befindet;
- Fig.5b: eine Darstellung gemäß Figur 5a, wobei die Schienen der Schienenlängsführung nicht mit dargestellt sind;
- Fig. 6: eine Darstellung gemäß Figur 5b, wobei die Rückenlehne des Sitzes aus ihrer Gebrauchsposition heraus ein Stück weit nach vorne geklappt worden ist;
- Fig. 7: eine weitere Darstellung gemäß Figur 5b, wobei die Rückenlehne des Sitzes bis auf die zugehörige Sitzfläche vorgeklappt worden ist;
- Fig. 8: eine Detaildarstellung einer Abwandlung der Memory-Einrichtung aus den Figuren 4a bis 7;
- Fig. 9a bis 9c: die Memory-Einrichtung aus Figur 8 in verschiedenen Phasen beim Anfahren der Memory-Position für einen Sitz, dessen Rückenlehne sich in ihrer Gebrauchsposition befindet;
- Fig. 10: eine schematische Darstellung eines Sitzgestelles.

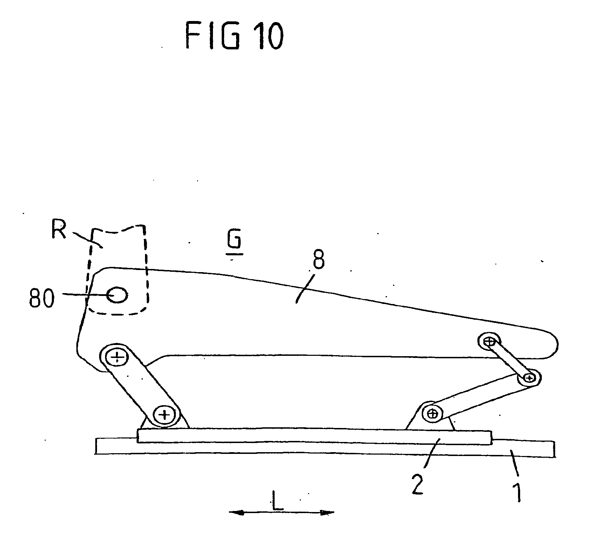

Das in Figur 10 in einer Seitenansicht dargestellte Sitzgestell G (Sitzuntergestell) umfasst eine Sitzschiene 2, die in Sitzlängsrichtung L beweglich auf einer an der Fahrzeugkarosserie zu befestigenden (karosseriefesten) Unterschiene 1 lagert, und ein Sitzseitenteil 8, das über vordere und hintere Gelenkhebel höhenverstellbar an der Sitzschiene 2 angelenkt ist. Auf seiner anderen, in Figur 10 nicht erkennbaren Längsseite weist das Sitzgestell G eine entsprechende Anordnung auf. Zwischen den beiden Sitzseitenteilen des Sitzgestelles G erstreckt sich eine Sitzfläche, die ein Sitzpolster aufnimmt, auf dem ein Fahrzeuginsasse Platz nehmen kann.

Ferner weisen die Seitenteile 8 des Sitzgestelles G jeweils eine Lagerstelle 80 zur schwenkbaren Lagerung einer in Figur 10 gestrichelt angedeuteten Rückenlehne R auf.

Vorliegend werden als Teile des Sitzgestells jeweils alle diejenigen Bauteile verstanden, die auf der karosseriefesten Unterschiene 1 in Sitzlängsrichtung bewegbar sind, also insbesondere die Sitzschiene 2, das Sitzseitenteil 8 sowie die hiermit verbundenen weiteren Bauteile des Sitzes.

Wird ein derartiger in Längsrichtung L verstellbarer Fahrzeugsitz für ein zweitüriges Fahrzeug verwendet, so ist es bekannt, zur Erleichterung des Einstiegs in den Fond des Fahrzeugs die Lehne an die Sitzlängsverstellung zu koppeln und zwar derart, dass bei einem Vorklappen der Rückenlehne R in Richtung auf die sich zwischen den Sitzseitenteilen 8 erstreckende Sitzfläche eine der Schienenlängsführung 1, 2 zugeordnete Feststellvorrichtung entriegelt wird und der Sitz mit vorgeklappter Rückenlehne vorgeschoben werden kann. Es handelt sich hierbei um eine sogenannte Easy-Entry-Funktion (Einstiegshilfe).

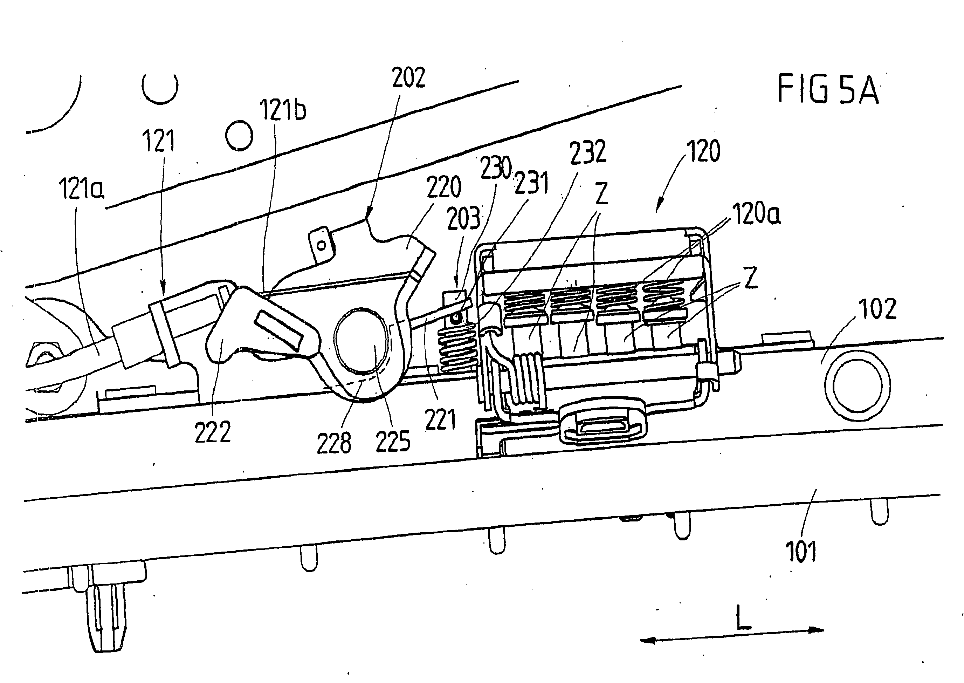

Im Folgenden wird zunächst anhand einer in den Figuren 5a bis 10 dargestellten und aus der DE 101 27 152 A1 bekannten Sitzanordnung das Grundprinzip der Easy-Entry-Funktion einschließlich einer programmierbaren Memory-Einrichtung zum automatischen Auffinden einer vorgebbaren Sitzlängsposition erläutert. Für weitere Einzelheiten hierzu wird auf die DE 101 27 152 A1 sowie auf die WO 00/55 002 A verwiesen, die diesbezüglich ausdrücklich zum Gegenstand der vorliegenden Beschreibung gemacht werden.

Wesentliche, charakteristische Merkmale der in den Figuren 5a bis 7 dargestellten Anordnung liegen u.a. in der Ausbildung eines Mitnehmers und eines zugeordneten Sperrelementes, die eine automatische Neueinstellung der Memory-Position ermöglichen, wenn der Fahrzeugsitz mit hochgeklappter Rückenlehne (Rückenlehne in Gebrauchsposition) verstellt wird und die eine Neueinstellung der Memory-Position verhindern, wenn der Fahrzeugsitz zur Ausübung der Easy-Entry-Funktion mit auf die Sitzfläche vorgeklappter Rückenlehne verschoben wird. Diese beiden Funktionsgruppen werden nachfolgend anhand der Figuren 5a bis 7 näher beschrieben werden.

In Figur 5a ist in perspektivischer Ansicht eine durch zwei Führungsschienen gebildete 101, 102 Schienenlängsführung bestehend aus einer karosseriefest anzuordnende Unterschiene 101 sowie einer das Sitzgestell tragenden Oberschiene 102 dargestellt. Diese Längsführung 101, 102 ermöglicht eine Einstellung der Sitzlängsposition (Lage des Sitzgestells in Sitzlängsrichtung L).

Zur Verriegelung einer zuvor eingestellten Sitzlängsposition ist eine Feststellvorrichtung 120 mit elastisch vorgespannten Sperrzähnen Z vorgesehen, die an der sitzseitigen Oberschiene 102 (Sitzschiene) angeordnet ist und deren Sperrzähne Z in zugeordnete Rastöffnungen der karosseriefesten Unterschiene eingreifen können, um die beiden Schienen 101, 102 zu verriegeln. Durch die elastische Vorbelastung der Sperrzähne Z in Richtung auf die zugeordneten Rastöffnungen hat die Feststellvorrichtung 120 die Tendenz, die beiden Schienen 101, 102 miteinander zu verriegeln, sofern diese nicht durch Einwirkung auf ein hierfür vorgesehenes Betätigungselement 120b (vergleiche DE 101 27 152 A1) entriegelt wird. Diese Einwirkung kann - wie in der DE 101 27 152 A1 im Einzelnen dargelegt - einerseits durch eine unmittelbare Entriegelung der Feststellvorrichtung über einen geeigneten Betätigungshebel erfolgen oder mittelbar durch Vorklappen der Rückenlehne zum Auslösen der Easy-Entry-Funktion.

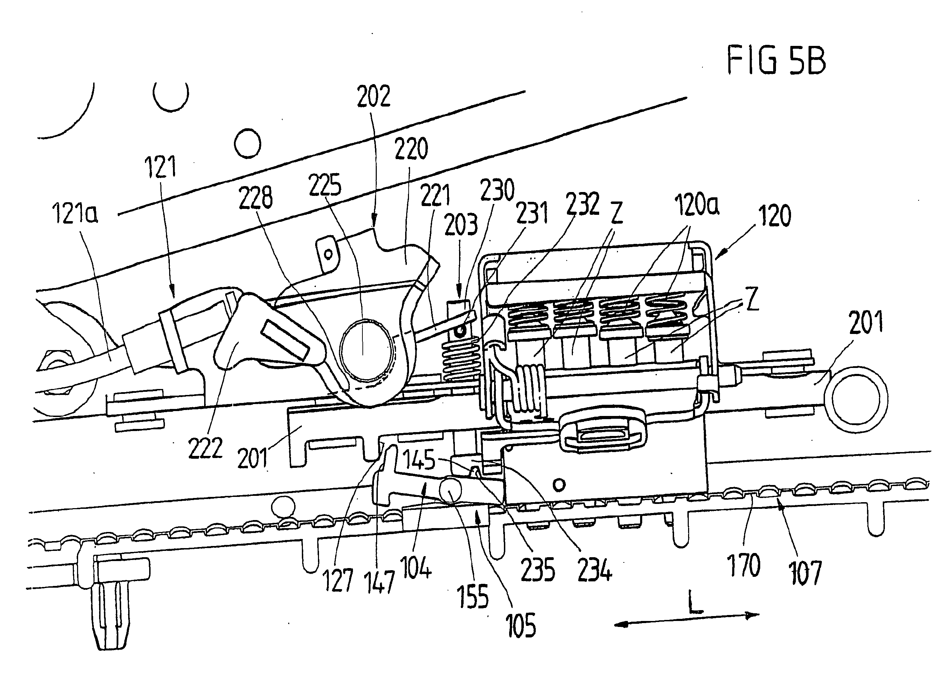

Weiterhin sind anhand der Figur 5a und insbesondere der Figur 5b, in der die Schienen 101, 102 nicht mit dargestellt sind, die wesentlichen Bestandteile einer Memory-Einrichtung 104, 105, 107 erkennbar, nämlich ein Gleiter 105, eine schwenkbar an dem Gleiter 105 angeordnete Sperrklinke 104 sowie eine mit Rastöffnungen 170 versehene Rastschiene 107, in die ein Rasthaken 141 der Sperrklinke 104 zur Verriegelung einer zuvor eingestellten Memory-Position eingreifen kann. Auch diesbezüglich wird für nähere Erläuterungen auf die DE 101 27 152A1 verwiesen.

In den Figuren 5a und 5b ist ein Ausschnitt des Sitzgestells in einem Zustand dargestellt, in dem der Sitz bei hochgeklappter (in seiner Gebrauchsposition befindlicher) Rückenlehne mittels der Feststellvorrichtung 120 in einer Memory-Position verriegelt ist.

In diesem Zustand wirkt auf die Sperrklinke 104 der Memory-Einrichtung ein Betätigungselement in Form eines Mitnehmers 203 derart ein, dass die Sperrklinke 104 mit ihrem Rasthaken 141 aus der Rastschiene 107 ausgehoben ist. Der Mitnehmer 203 ist längsverschieblich an der Sitzschiene 102 bzw. einem an der Sitzschiene 102 befestigten Halteteil 201 angeordnet und umfasst einen längserstreckten Grundkörper 230, an dessen unterem, der Sperrklinke 104 zugewandten Ende ein mit einer Mitnahmeöffnung 235 versehenes Mitnahmeelement 234 ausgebildet bzw. befestigt ist. Dieser Mitnehmer 203 ist mittels eines elastischen Elementes 232 in Form einer Druckfeder (Rückstellfeder), die sich einerseits an dem Halteteil 201 und andererseits an einem von dem Grundkörper 230 des Mitnehmers 203 abstehenden Vorsprung 231 abstützt, derart in einer Richtung weg von der Sperrklinke 104 vorgespannt, dass er die Tendenz hat, von der Sperrklinke 104 abzuheben. Dies wird jedoch verhindert durch ein Sperrelement 221 am Grundkörper 220 eines um eine Achse 225 schwenkbar gelagerten Hebels 202, der mittels eines Federelementes 228 in Form einer Drehfeder derart in Richtung auf den Vorsprung 231 des Mitnehmers 203 vorgespannt ist, dass das Sperrelement 221 den Mitnehmer entgegen der Wirkung des am Mitnehmer vorgesehenen elastischen Elementes 232 gegen die Sperrklinke drückt, so dass der Rasthaken 141 der Sperrklinke 104 aus der Rastschiene 107 ausgehoben ist. Dadurch greift gleichzeitig ein als Rastnase ausgebildeter Vorsprung 145 der Sperrklinke 104 in die Mitnahmeöffnung 235 des Mitnehmers 203 ein.

Dies wird dadurch erreicht, dass das mittels der Drehfeder 228 vorgespannte Sperrelement 221 auf den Mitnehmer 203 eine Kraft in Richtung auf die Sperrklinke 204 ausübt, die größer ist als die aufgrund der Druckfeder 232 in entgegengesetzter Richtung wirkende Kraft. Somit ist der Rasthaken 141 aus den Rastöffnungen 170 der Rastschiene 107 ausgehoben und die Sperrklinke 104 kann bei einer Verschiebung des Sitzes mit hochgeklappter Rückenlehne in Sitzlängsrichtung L mitgenommen werden, so dass die Memory-Position bei der Verschiebung des Sitzes gleichzeitig neu eingestellt wird.

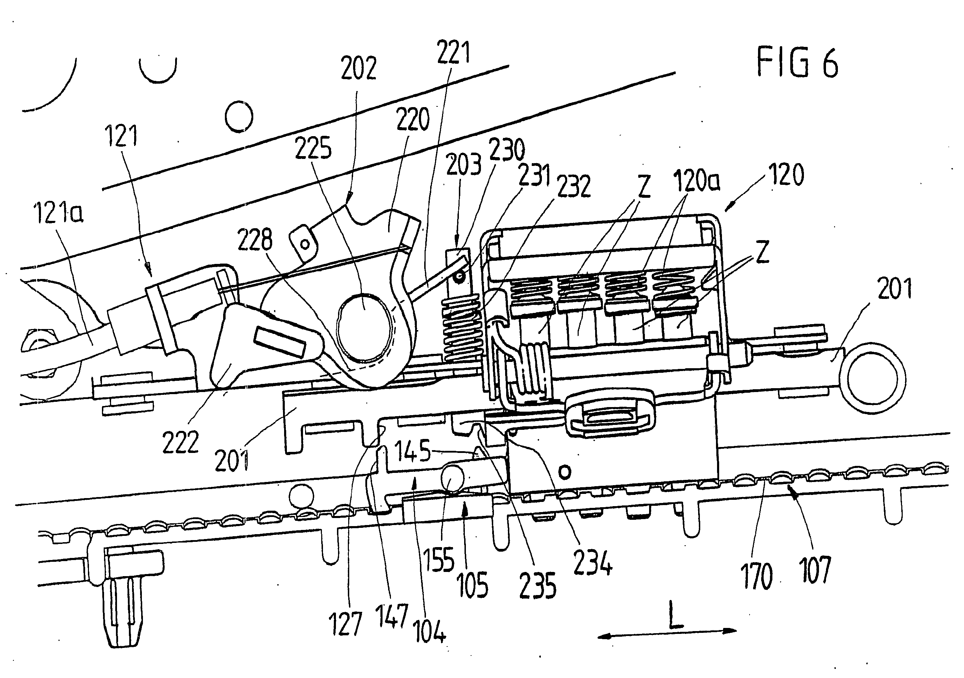

Wird in dem in den Figuren 5a und 5b gezeigten Zustand des Sitzes die Rückenlehne nach vorne in Richtung auf die Sitzfläche geklappt, so wird hierdurch die Seele 121a eines Bowdenzuges 121a, 121b gespannt, die mit einem Ende mit der Sitzlehne und mit dem anderen Ende mit dem Grundkörper 220 des schwenkbar gelagerten Hebels 202 verbunden ist. Hierdurch wird der Hebel 202 derart verschwenkt, dass das Sperrelement 221 von dem Vorsprung 231 des Mitnehmers 203 und somit der Mitnehmer 203 unter der Wirkung der Druckfeder 232 von der Sperrklinke 104 abhebt. Da die Sperrklinke 104 - wie z.B. in der DE 101 27 152 A1 erläutert - wiederum mittels eines Federelementes derart unter Vorspannung steht, dass der Rasthaken 141 der Sperrklinke 104 die Tendenz hat, in eine der Rastöffnungen 170 der Rastschiene 107 einzugreifen, wird die Sperrklinke 104 in ihrer aktuellen Position verriegelt. Dies entspricht einer Verriegelung der Memory-Einrichtung 104, 105, 107 insgesamt. Dieser Zustand ist in Figur 6 dargestellt.

Der Mechanismus ist derart ausgelegt, dass die Verriegelung der Memory-Einrichtung 104, 105, 107 bei einem Vorklappen der Rückenlehne aus einer vertikalen Gebrauchsposition um etwa 20° bis 40° erfolgt. Die Verriegelung der Memory-Einrichtung geschieht somit schon in der ersten Stufe (Phase) der Aktivierung des Easy-Entry-Mechanismus durch Vorklappen der Rückenlehne in Richtung auf die Sitzfläche. Die Feststellvorrichtung 120 ist in dieser ersten Phase des Vorklappens der Rückenlehne nach wie vor verriegelt, so dass noch keine Verschiebung des Sitzes in Längsrichtung L erfolgen kann.

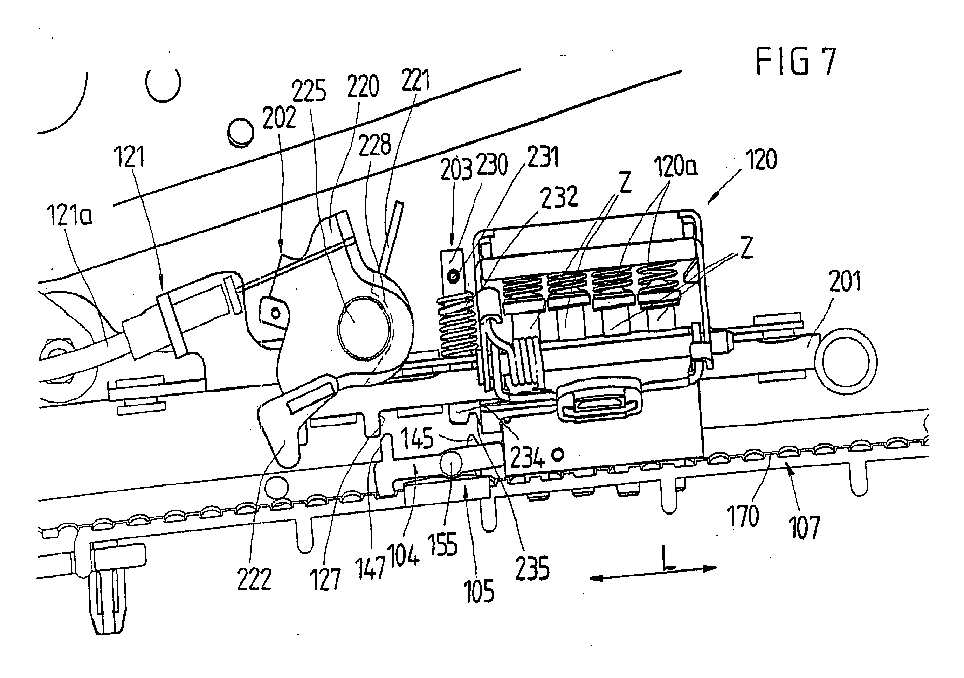

Dies wird erst bei einem weiteren Vorklappen der Rückenlehne ermöglicht, wobei gemäß Figur 7 ein an dem schwenkbar gelagerten Hebel 202 vorgesehener Betätigungsabschnitt 222 auf einen Betätigungshebel 109 der Feststellvorrichtung 120 einwirkt, so dass die Feststellvorrichtung 120 entriegelt wird. Dies ermöglicht dann eine Verschiebung des Sitzes in Längsrichtung L.

Demnach ist eine Verschiebung des Sitzes in Längsrichtung L bei einem Vorklappen der Rückenlehne zum Ausführen der Easy-Entry-Funktion erst möglich, nachdem die Sperrklinke 104 der Memory-Einrichtung 104, 105, 107 verriegelt worden ist. Somit ist die beim Vorklappen der Rückenlehne bestehende Memory-Position zuverlässig fixiert, bevor eine Verschiebung des Sitzes mit vorgeklappter Rückenlehne erfolgen kann. Diese Memory-Position kann dann beim anschließenden Zurückfahren des Sitzes wieder aufgefunden werden, wie in der DE 101 27 152 A1 erläutert. Es wird also verhindert, dass beim Ausüben der Easy-Entry-Funktion eine Verschiebung des Sitzes mit vorgeklappter Rückenlehne erfolgen kann bevor die Ausgangsposition des Sitzes als Memory-Position fixiert ist.

Dabei ist die gesamte Anordnung wegen der Verschieblichkeit des Mitnehmers 203 im Wesentlichen senkrecht zur Erstreckungsrichtung L der Schienenlängsführung sowie wegen der schwenkbaren Lagerung des Hebels 202 mit dem Sperrelement 221 sehr kompakt und befindet sich im Wesentlichen in dem von den Schienen 101, 102 der Schienenlängsführung umschlossenen Raum bzw. ragt lediglich nach oben aus diesem hinaus. Wird gemäß den Figuren 5a bis 7 die Rückenlehne des Sitzes vorgeklappt, um die Easy-Entry-Funktion auszulösen, so kann das Problem auftreten, dass der Rasthaken 141 der Sperrklinke 104 nicht in eine der Rastöffnungen 170 der Rastschiene 107 eingreifen kann. Denn die Feststellvorrichtung 120 ermöglicht in der Regel eine stufenlose Einstellung der Sitzlängsposition, vergleiche etwa die in der DE 299 10 720 U1 beschriebene Feststellvorrichtung, während vorliegend für die Verriegelung der Memory-Position eine feinstufige (also keine stufenlose) Verrastung (unter Verwendung der Rastschiene 107 mit Rastöffnungen 170) vorgesehen ist. Es kann also der Fall auftreten, dass beim Vorklappen der Rückenlehne der Rasthaken 141 der Sperrklinke 104 nicht in eine Rastöffnung 170 eingreifen kann, sondern auf deren Rand aufsteht. Hierdurch ist zunächst keine Verriegelung der Memory-Position möglich.

Wird nun bei vorgeklappter Rückenlehne das Sitzgestell und somit auch die Sitzschiene 102 aus der Memory-Position heraus in Sitzlängsrichtung nach vorne verschoben (Easy-Entry), so wird hierbei die Sperrklinke 104 zusammen mit dem Gleiter 105 noch ein Stück weit mitgenommen, da ein an der Sitzschiene 102 vorgesehener Anschlag 127 auf einen zugeordneten sperrklinkenseitigen Anschlag 147 einwirkt. Die Sperrklinke 104 und der Gleiter 105 werden dabei nur soweit mitgenommen, bis der Rasthaken 141 der Sperrklinke 104 unter der Wirkung des an der Sperrklinke vorgesehenen Federelementes vollständig in die nächstgelegene Rastöffnung 170 der Rastschiene 107 eingreifen kann. Die Sperrklinke 104 und somit die Verriegelungsvorrichtung 104, 107 der Memory-Einrichtung 104, 105, 107 insgesamt sind dann in derjenigen Memory-Position verriegelt, die der Sitzlängsposition am nächsten liegt, in der die Feststellvorrichtung 120 vor dem Vorklappen der Rückenlehne verriegelt war.

In dem Verriegelungszustand, in dem der Rasthaken 141 der Sperrklinke 104 in eine Rastöffnung 170 der Rastschiene 107 eingreift, befindet sich der sperrklinkenseitige Anschlag 147 unterhalb des sitzschienenseitigen Anschlages 127, so dass diese Anschläge 127, 147 nicht mehr miteinander in Wirkverbindung treten können. Der Sitz kann dann weiter in Sitzlängsrichtung L nach vorne verschoben werden, wobei die Sperrklinke 104 und der Gleiter 105 in der zuvor verriegelten Memory-Position verbleiben.

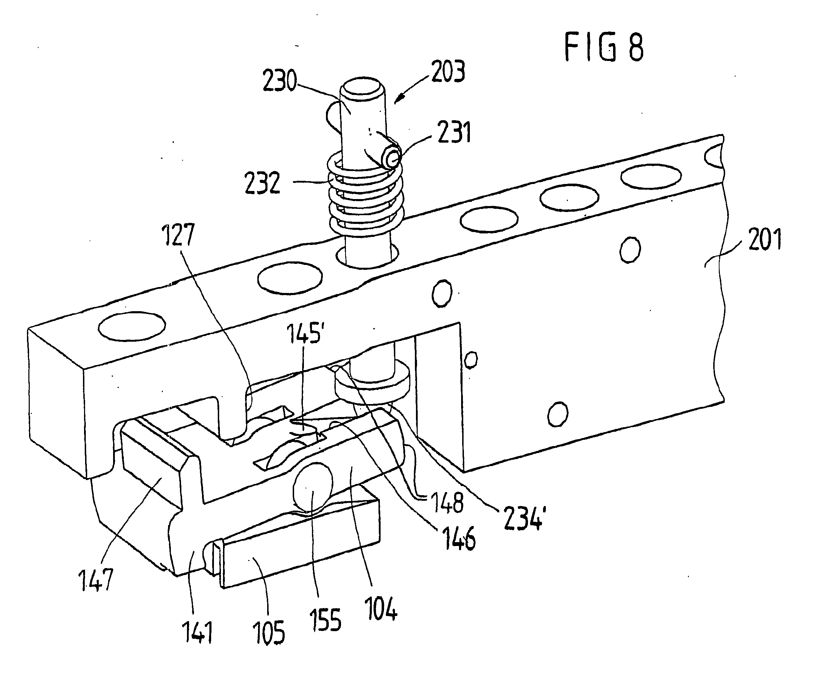

In Figur 8 ist eine erfindungsgemäße Abwandlung des Ausführungsbeispiels aus den Figuren 5a bis 7 dargestellt, und zwar mit Blick auf das Anfahren der Memory-Position beim Zurückschieben des Sitzes mit in Gebrauchsposition befindlicher, also hochgeklappter Rückenlehne. Dies betrifft insbesondere den Fall, dass der Sitz nach hinten in Richtung auf die Memory-Position verschoben wird, während sich ein Fahrzeuginsasse auf dem Sitz befindet.

Wird der Sitz mit hochgeklappter Rückenlehne in die Memory-Position verschoben, nachdem er zuvor mit vorgeklappter Rückenlehne, also ohne Mitnahme der Sperrklinke 104 und des Gleiters 105 aus der Memory-Position heraus verschoben worden war, so trifft der Mitnehmer 203 beim Erreichen der Memory-Position auf die Sperrklinke 104. Dabei ist der Mitnehmer 203 wegen der in Gebrauchsposition befindlichen Rückenlehne mittels des Sperrelementes 221 (in Figur 8 nicht dargestellt) in Richtung auf die Sperrklinke 104 der Memory-Einrichtung nach unten gedrückt.

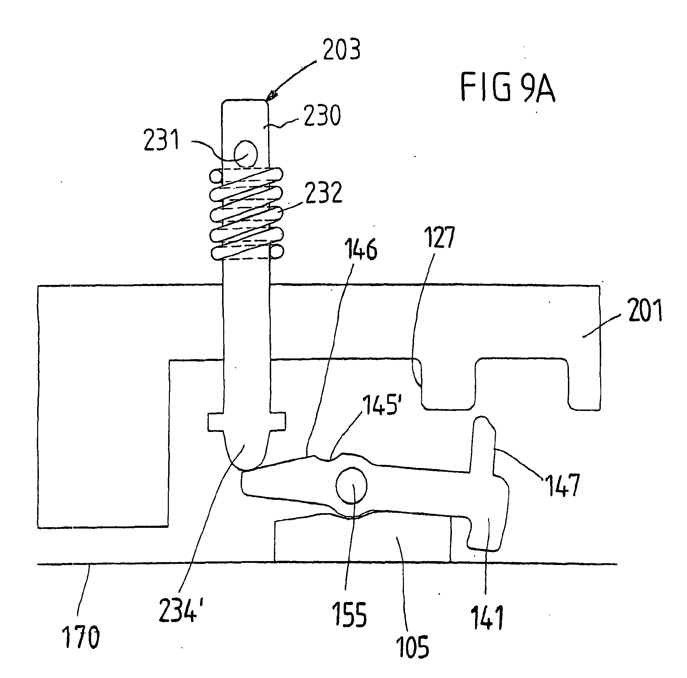

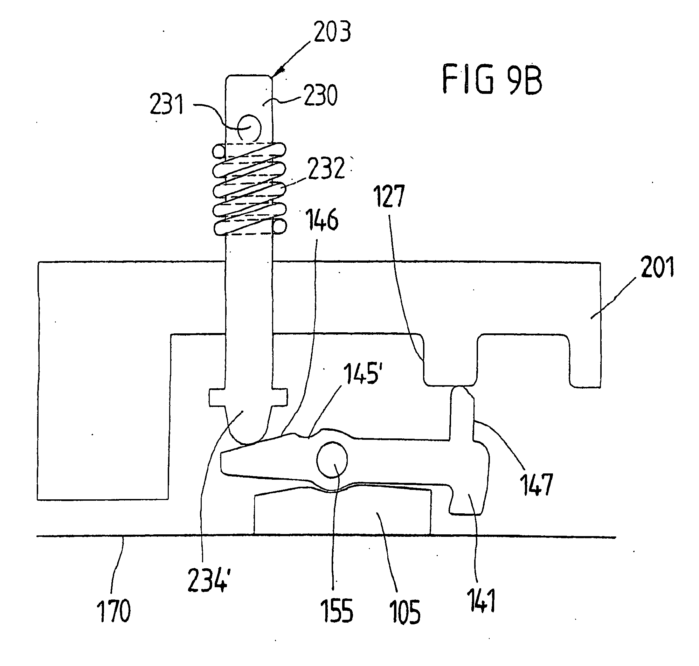

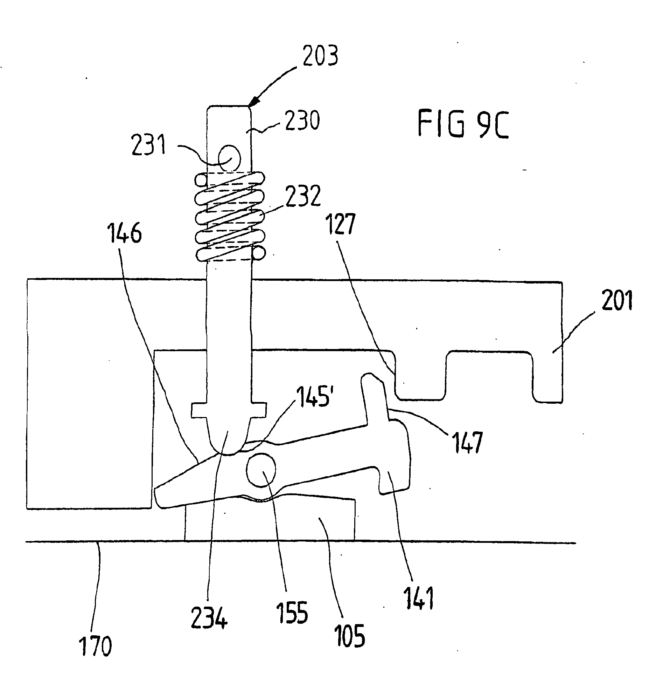

Um in diesem, in Figur 8 dargestellten Zustand, das Erreichen der tatsächlichen Memory-Position, in der der Mitnehmer 203 formschlüssig in die Sperrklinke 104 eingreift, zu ermöglichen, weist die Sperrklinke 104 eine Rampe 146 auf, auf der der untere Endabschnitt 234' des Mitnehmers 203 bis zu einer Mulde 145' der Sperrklinke 104 gleiten kann. Dies ist in den Figuren 9a bis 9c dargestellt, wobei der Mitnehmer 203 abschließend in der Memory-Position mit seinem unteren Endabschnitt 234' in die zugeordnete Mulde 145' der Sperrklinke 104 eingreift. Der untere Endabschnitt 234' des Mitnehmers 203 sowie die Mulde 145' der Sperrklinke 104 wirken dann als Anschläge, die eine Mitnahme der Sperrklinke 104 zusammen mit dem Gleiter 105 beim weiteren Verschieben des Sitzes ermöglichen.

Die Rampe 146 erstreckt sich dabei nur über einen Teil der Breite der Sperrklinke 104 (Ausdehnung senkrecht zur Sitzlängsrichtung L und zur Bewegungsrichtung des Mitnehmers 203), so dass benachbarte Bereiche 148 der Sperrklinke 104 als Anschläge wirken können, um im verriegelten Zustand der Sperrklinke 104 die Memory-Position zu definieren.

Da der Mitnehmer 203 beim Anfahren der Memory-Position mit in Gebrauchsposition befindlicher, hochgeklappter Rückenlehne in Richtung auf die Sperrklinke 104 nach unten gedrückt ist, hebt er beim Anfahren der Memory-Position gleichzeitig auch den Rasthaken 141 der Sperrklinke 104 aus der zugeordneten Rastschiene 107 aus. Erst hierdurch wird die gemeinsame weitere Verstellung des Sitzes einerseits sowie von Sperrklinke 104 und Gleiter 105 andererseits ermöglicht.

Durch das Zusammenwirken des sitzgestellseitigen Anschlages 127 mit dem sperrklinkenseitigen Anschlag 147 beim Anfahren der Memory-Position, wobei sich der sperrklinkenseitige Anschlag 147 der Verriegelungsvorrichtung (Sperrklinke 104) in vertikaler Richtung (parallel zur Bewegungsrichtung des Mitnehmers 203) an dem sitzgestellseitigen Anschlag 127 abstützt, während der Mitnehmer 203 entlang der Rampe 146 gleitet, ist das Ausheben der Sperrklinke 104 aus der zugeordneten Rastschiene 107 erst möglich, nachdem der sperrklinkenseitige Anschlag 147 den sitzgestel-Iseitigen Anschlag 127 passiert hat. Der Mitnehmer 203 greift dann in die Mulde 145' ein. Da die Anschläge 127, 147 zunächst ein Verschwenken der Sperrklinke 104 verhindern und die Rampe 147 in Sitzlängsrichtung geneigt verläuft, wird der Mitnehmer 203 beim Befahren der Rampe 146 zunächst angehoben. Hierbei führt der (mittels der Feder 232) federnd gelagerte Mitnehmer 203 eine Ausgleichsbewegung in vertikaler Richtung durch.

Zusammenfassend ermöglicht die in den Figuren 8 bis 9c dargestellte Ausführungsform der Erfindung beim Anfahren der Memory-Position mit in Gebrauchsposition befindlicher, hochgeklappter Rückenlehne, eine automatische Mitnahme von in der Memory-Position befindlichen Teilen 104, 105 der Memory-Einrichtung, so dass beim Verstellen des Sitzes mit hochgeklappter Rückenlehne eine automatische Neueinstellung der Memory-Position erfolgen kann. Wird jedoch die Memory- Position mit auf die Sitzlehne vorgeklappter Rückenlehne angefahren, so befindet sich der Mitnehmer 203 unter der Wirkung der Druckfeder 232 in einer Position, in der er nicht auf die Sperrklinke 104 der Memory-Einrichtung 104, 105, 107 einwirken kann. Dadurch bleibt die Sperrklinke 104 zusammen mit dem Gleiter 105 in der Memory-Position verriegelt, in der der Sitz dann automatisch angehalten wird, so dass die zuvor eingestellte Memory-Position beim zurückschieben des Sitzes mit vorgeklappter Rückenlehne - wie gewünscht - wiedergefunden worden ist.

Wie insbesondere anhand Figur 8 erkennbar ist, wird durch die Rampe 146 überhaupt erst das Auffahren des Mitnehmers 203 auf die Sperrklinke 104 ermöglicht, da ansonsten der Mitnehmer 203 beim Anfahren der Memory-Position mit der Sperrklinke 104 in Anschlag geriete und nicht auf diese Auffahren könnte, um die Verriegelungsvorrichtung zu entriegeln. Mit anderen Worten ausgedrückt, wird der Niederhalter mittels der Rampe (zu der Mulde 145' hin) angehoben.

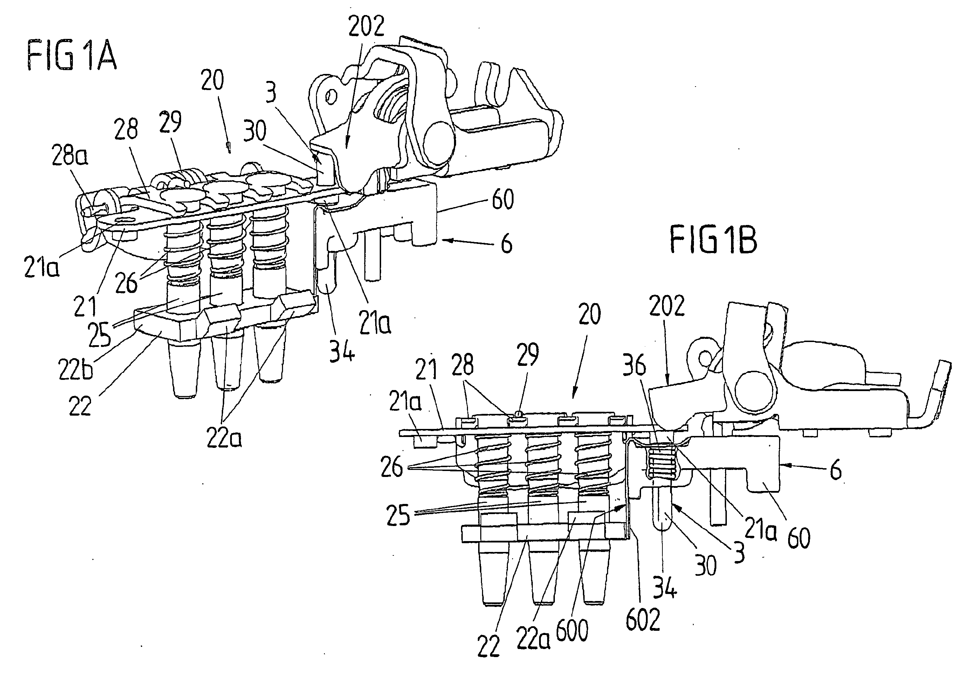

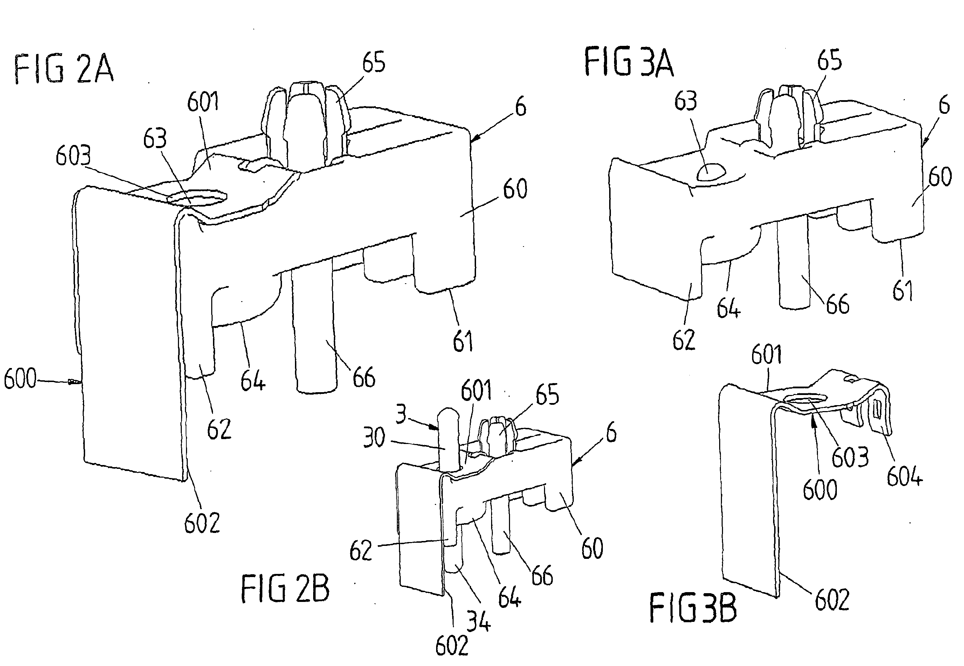

Es wird nun anhand der Figuren 1a bis 4b eine Weiterbildung der bekannten, vorstehend anhand der Figuren 5a bis 10 erläuterten Anordnungen beschrieben. Dabei unterscheidet sich die anhand der Figuren 1a bis 4b zu erläuternde Anordnung von dem in den Figuren 5a bis 10 gezeigten Sitzgestell insbesondere hinsichtlich der Ausbildung der Feststellvorrichtung 120 sowie hinsichtlich der Ausbildung einer an der Sitzschiene 102 der Schienenlängsführung 101, 102 angeordneten Memory-Baugruppe 6, welche mit der Memory-Einrichtung 104, 105, 107 der in den Figuren 5a bis 9c dargestellten Art zusammen wirkt. Nur auf die vorstehend angegebenen, neuartig ausgebildeten Komponenten eines Kraftfahrzeugsitzes mit Easy-Entry-Funktion und Memory-Einrichtung, wie er zuvor anhand der Figuren 5a bis 10 im Überblick beschrieben worden ist, wird nachfolgend weiter eingegangen werden.

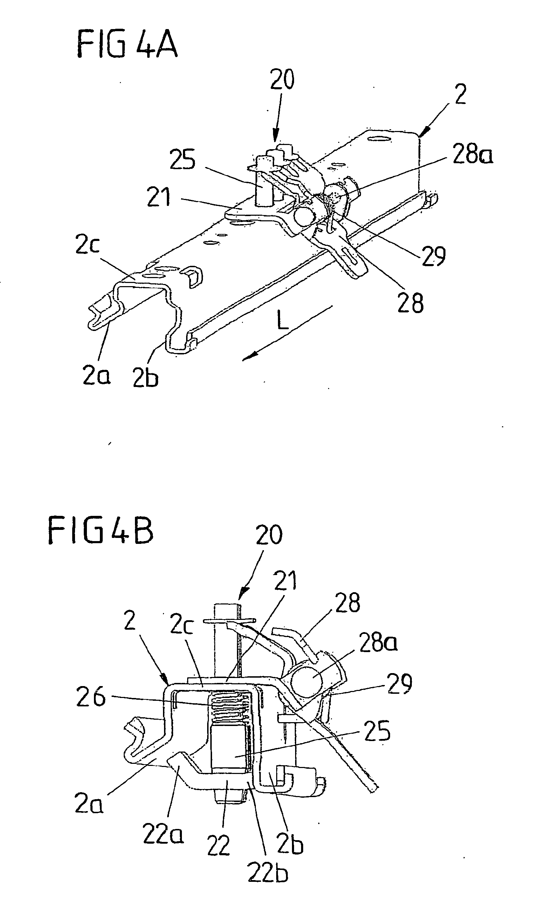

Gemäß den Figuren 1a und 1b sowie 4a und 4b weist eine Feststellvorrichtung 20, die zur Arretierung einer Schienenlängsführung (von der in den Figuren 4a und 4b lediglich die Sitzschiene 2 erkennbar ist) Sperrelemente in Form von Sperrzähnen 25 auf, welche längsbeweglich an zwei Führungsblechen 21, 22 der Feststellvorrichtung 20 gelagert sind. Die beiden Führungsbleche 21, 22 sind entlang der Bewegungsrichtung (Verschieberichtung) der Sperrzähne 25 voneinander beabstandet und weisen jeweils Durchgangsöffnungen als Führungsöffnungen für die Sperrzähne 25 auf.

Jedem der Sperrzähne 25 ist ein elastisches Element in Form einer Schraubenfeder 26 zugeordnet, die sich einerseits an dem jeweiligen Sperrzahn 25 und andererseits an dem einen Führungsblech 21 der Feststellvorrichtung 20 derart abstützt, dass die Sperrzähne 25 im Wesentlichen klapperfrei gehalten werden und dabei derart vorgespannt sind, dass sie in zugeordnete Rastöffnungen eingreifen, um die Schienelängsführung (von der in den Figuren 4a und 4b lediglich die Sitzschiene 2 erkennbar ist) in einer zuvor eingestellten Sitzlängsposition zu verriegeln.

Zur Betätigung der Sperrzähne 25, d.h., um diese aus ihrem verriegelten Zustand heraus bewegen zu können und dadurch eine Verschiebung der beiden Führungsschienen zueinander in eine neue Sitzlängsposition zu ermöglichen, ist ein schwenkbar um eine parallel zur Schienenlängsrichtung L verlaufende Achse 28a angeordneter Betätigungshebel 28 vorgesehen, der mittels eines elastischen Elementes in Form einer Drehfeder 29 in Richtung auf eine Position vorgespannt ist, in der die Sperrzähne 25 nicht aus ihrer Verriegelungsposition heraus angehoben sind. Mit anderen Worten ausgedrückt, unterstützt auch die Drehfeder 29 (durch Einwirkung auf den Betätigungshebel 28) die Vorbelastung der Sperrzähne 26 in eine Position, in der die Feststellvorrichtung die Führungsschienen der Schienenlängsführung in einer zuvor eingestellten Sitzlängsposition verriegelt.

Wie anhand der Figuren 4a und 4b erkennbar, sind die beiden Führungsbleche 21, 22 der Feststellvorrichtung 20 jeweils an der Sitzschiene 2 angeordnet und mit dieser verbunden. Dabei liegt das eine Führungsblech 21 auf der Basisfläche 2c der im Querschnitt im Wesentlichen U-förmigen Führungsschiene 2 auf und ist über eine durch einen Durchzug gebildete Befestigungsstelle 21a mit der Sitzschiene 2 verbunden, indem der Durchzug 21a in eine entsprechende Befestigungsöffnung der Sitzschiene 2 eingeführt und anschließend aufgeweitet worden ist, so dass er sich kraftschlüssig an den Rand der zugeordneten Befestigungsöffnung der Sitzschiene 2 anlegt und diesen Rand zusätzlich formschlüssig übergreift. Alternativ ist auch eine Befestigung des einen Lagerbleches 21 an der zugeordneten Sitzschiene 2 durch Nieten oder Schrauben möglich.

Das andere Führungsblech 22, welches entlang der Erstreckungs- bzw. Verschieberichtung der Sperrzähne 25 von dem ersten Führungsblech 21 beabstandet ist, erstreckt sich von dem einen abgewinkelten Schenkel 2a zu dem anderen abgewinkelten Schenkel 2b der U-förmigen Sitzschiene 2 und stützt sich dort jeweils mit seitlichen Endabschnitten 22a, 22b ab. Die Verbindung zwischen dem weiteren Führungsblech 22 und der Sitzschiene 2 erfolgt durch Laserschweißen an mindestens einem seitlichen Endabschnitt 22b des entsprechenden Führungsbleches 22.

Eine Besonderheit der vorstehend anhand der Figuren 1a und 1b sowie 4a und 4b beschriebenen Feststellvorrichtung liegt in der Ausbildung der Lager- und Führungseinrichtung für die Sperrzähne 25, die durch zwei voneinander beabstandete Führungsbleche 21, 22 gebildet wird - im Gegensatz zu den bekannten Leichtmetallgussgehäusen zur Aufnahme der Sperrzähne. Hierdurch lassen sich Gewicht und Kosten der Feststellvorrichtung weiter reduzieren. Die Ausbildung der Sperrzähne 25 und deren Verspannung in Richtung auf eine Verriegelungsposition mittels geeigneter elastischer Elemente 26, 29 sowie die Verwendung eines schwenkbaren Betätigungshebels 28 zum Überführen der Sperrzähne 25 aus der Verriegelungsposition in einen Entriegelzustand, in der eine Verschiebung der beiden Führungsschienen der Schienenlängsführung zueinander ermöglicht wird, ist demgegenüber vom Prinzip her aus der DE 101 27 152 A1 bekannt.

Die Verwendung von Führungsblechen zur verschieblichen Lagerung der Sperrzähne 25 der Feststellvorrichtung 20 ermöglicht eine neuartige Ausbildung einer der Sitzschiene 2 zugeordneten Memory-Baugruppe, welche mit der der jeweiligen karosseriefesten Schiene 1 bzw. 101 (vgl. Figuren 5a bis 10) zugeordneten Memory-Vorrichtung 104, 105, 107, und zwar insbesondere mit deren beweglichen Komponenten 104, 105 (vor allem der Sperrklinke 104) zusammen wirkt, wie vorstehend anhand der Figuren 5a bis 10 bereits beschrieben. Im Folgenden werden unter Bezugnahme auf die Figuren 1a bis 3b die beweglichen Komponenten (Verriegelungsvorrichtung in Form einer Sperrklinke 104, Gleiter 105) der der karosseriefesten Schiene zugeordnete Memory-Einrichtung 104, 105, 107 als erste Memory-Baugruppe bezeichnet, und es werden die hiermit zusammen wirkenden, an der Sitzschiene 2 angeordneten Elemente als zweite Memory-Baugruppe bezeichnet.

Die zweite Memory-Baugruppe 6 weist erfindungsgemäß einen aus Kunststoff bestehenden Grundkörper 60 in Form eines Kunststoffgehäuses auf, welcher mittels eines Schnappelementes 65 an der Sitzschiene 2 einer Schienenlängsführung zu befestigen ist. Hierzu wird das vorzugsweise einstückig an dem Grundkörper 60 angeformte Schnappelement 65 in eine zugeordnete Befestigungsöffnung der Sitzschiene 2 eingeführt und dann mittels eines Verriegelungsstiftes 66 aufgespreizt, so dass es die entsprechende Befestigungsöffnung formschlüssig hintergreift und bevorzugt zudem kraftschlüssig am Rand der Öffnung anliegt. Alternativ können auch ein Niet oder sonstige geeignete Befestigungselemente als Verbindungsmittel verwendet werden.

An den Grundkörper 60 ist eine Führungsfläche 61 ausgebildet, die (entsprechend dem Anschlag 127 aus den Figuren 5b bis 9c) beim Anfahren der Memory-Position mit hochgeklappter Rückenlehne mit einem zugeordneten Anschlag 147 der Sperrklinke 104 der ersten Memory-Baugruppe 104, 105 zusammen wirken kann.

Ferner ist an dem Grundkörper 60 eine als Durchgangsöffnung ausgebildete Führung 63 in Form einer für ein Betätigungselement 3 ausgebildet, das durch einen Mitnehmer in Form eines Bolzens 30 mit einem Betätigungskopf 34 gebildet wird und das zur Einwirkung auf die Sperrklinke 104 der ersten Memory-Baugruppe 104, 105 in Abhängigkeit von der Schwenkposition der Rückenlehne des entsprechenden Fahrzeugsitzes betätigbar ist, wie vorstehend anhand der Figuren 5a bis 10 bereits beschrieben.

Dabei kann das Betätigungselement 3 auch in anderer Weise mit der ersten Memory-Baugruppe 104, 105, insbesondere deren Sperrklinke 104 zusammenwirken, vergleiche DE 101 27 151 A1, DE 101 27 153 A1 sowie DE 202 10 895 A1.

Im Zusammenhang mit der vorliegenden Erfindung ist allein von Bedeutung, dass das Betätigungselement 3 an dem aus Kunststoff bestehenden Grundkörper 60 der zweiten Memory-Baugruppe 6 gelagert ist, welche wiederum an der Sitzschiene einer Schienenlängsführung festgelegt ist, und dass dieses Betätigungselement 3 mit einer ersten Memory-Baugruppe 104, 105, insbesondere deren Sperrklinke 104, zusammenwirkt, welche der karosseriefesten Führungsschiene einer Schienenlängsführung zugeordnet ist.

Dabei ist an dem aus Kunststoff bestehenden Grundkörper 60 ferner ein Gehäuse 64 angeformt, in dem gemäß Figur 1b ein elastisches Element in Form einer Schraubenfeder verliersicher aufgenommen ist, mittels der das Betätigungselement 3 in einer bestimmten Richtung, d. h., (je nach Verwendungszweck im Einzelfall) in Richtung auf die Sperrklinke 104 der Memory-Einrichtung oder in einer Richtung weg von der Sperrklinke 104 der Memory-Vorrichtung vorgespannt ist.

Die zweite Memory-Baugruppe 6 weist ferner einen Anschlag 602 auf, der beim Erreichen der Memory-Position mit einem Gegenanschlag der ersten Memory-Baugruppe 104, 105 in Eingriff tritt, um das Sitzgestell beim Erreichen der Memory-Position anzuhalten. Der entsprechende Gegenanschlag kann beispielsweise durch die Sperrklinke 104 der ersten Memory-Baugruppe gebildet werden.

Da beim Erreichen der Memory-Position an dem Anschlag 602 der zweiten Memory-Baugruppe große Anschlagkräfte wirken können, ist dieser an einem separaten Bauteil 600 aus Federblech ausgebildet, welches mittels eines großflächigen Umgriffes 601, 604 mit Rastlaschen 104 formschlüssig an dem aus Kunststoff bestehenden Grundkörper 60 fixiert, insbesondere verrastet ist.

Der den Anschlag 602 bildende Abschnitt (Schenkel) des Blechteiles 600 erstreckt sich dabei entlang eines abgewinkelten Abschnittes 62 des aus Kunststoff bestehenden Grundkörpers 60; und eine Basisfläche 601 des Blechteiles 600 weist eine Durchgangsöffnung 603 auf, die mit der zur Führung des Betätigungselementes 3 dienenden Durchgangsöffnung 63 des aus Kunststoff bestehenden Grundkörpers 60 fluchtet.
Dabei wird das Betätigungselement 3 nicht nur in der Durchgangsöffnung 63 des aus Kunststoff bestehenden Grundkörpers 60 geführt, sondern zusätzlich auch in einem Durchzug 21a, der an dem einen, oberen Lagerblech 21 ausgebildet ist und der von dem Betätigungselement 3 durchgriffen wird, vergleiche insbesondere Figur 1b. Der der Führung des Betätigungselementes 3 dienende Durchzug 21a ist dabei in gleicher Weise ausgebildet wie die der Befestigung des einen Lagerbleches 21 an der Sitzschiene 2 dienenden Durchzüge 21a. Derartige Durchzüge 21a können an dem Lagerblech 21 in einfacher Weise dadurch geformt werden, dass in dem Lagerblech 21 eine Durchgangsöffnung gebildet wird und durch diese ein Dorn gezogen wird, dessen Außendurchmesser größer ist als der Durchmesser der zuvor gebildeten Durchgangsöffnung. Hierdurch wird an dem Lagerblech 21 ein hier als Durchzug 21a bezeichneter rohrförmiger Abschnitt geformt, indem Material vom Rand der zuvor gebildeten Durchgangsöffnung mittels des Ziehdornes nach außen verdrängt wird und einen rohrförmig von dem Lagerblech 21 abstehenden Abschnitt (Durchzug 21a) bildet.

Der den Anschlag 602 bildende Abschnitt des Blechteiles 600 stützt sich ferner derart an dem zweiten Lagerblech 22 der Feststellvorrichtung 20 ab, dass beim Anfahren der Memory-Position an dem Anschlag 602 wirkende Kräfte unmittelbar in das zweite Lagerblech 22 eingeleitet werden und von dort über dessen Abstützstellen 22a, 22b durch die Sitzschiene 2 aufgenommen werden können, vergleiche Figuren 4a und 4b.

## Patentansprüche

1. Memory-Einrichtung für eine Schienenlängsführung eines Kraftfahrzeugsitzes, die zwei längserstreckte, in Erstreckungsrichtung (L) zueinander verschiebliche Führungsschienen (1, 2; 101, 102) zur Einstellung der Sitzlängsposition aufweist, mit
- einer ersten Memory-Baugruppe (104, 105), die zur Einstellung einer Memory-Position entlang einer der beiden Führungsschienen (1, 2) in deren Erstreckungsrichtung (L) verschieblich ist und die eine Verriegelungsvorrichtung (104) zum Verriegeln einer eingestellten Memory-Position aufweist, und
- einer zweiten Memory-Baugruppe (6), die an der zweiten der beiden Führungsschienen (1, 2) angeordnet ist und die einen Anschlag (602) aufweist, der beim Erreichen einer der Memory-Position entsprechenden Relativposition der beiden Führungsschienen (1, 2) mit einem Gegenanschlag der ersten Memory-Baugruppe (104, 105) in Eingriff tritt,
**dadurch gekennzeichnet,**
**dass** die zweite Memory-Baugruppe (6) einen aus Kunststoff bestehenden Grundkörper (60) aufweist, über den sie an der zweiten Führungsschiene (2) befestigt ist.

2. Memory-Einrichtung nach Anspruch 1, **dadurch gekennzeichnet, dass** der Grundkörper (60) mindestens ein Betätigungselement (3) und/oder mindestens eine Betätigungsfläche (61) zur Betätigung der Verriegelungsvorrichtung (104) der ersten Memory-Baugruppe (104, 105) aufweist.

3. Memory-Einrichtung nach Anspruch 2, **dadurch gekennzeichnet, dass** der Grundkörper (60) eine Führung (63) für ein zur Einwirkung auf die Verriegelungsvorrichtung (104) vorgesehenes Betätigungselement (3) aufweist.

4. Memory-Einrichtung nach Anspruch 3, **dadurch gekennzeichnet, dass** die Führung (63) einstückig an dem Grundkörper (60) ausgebildet ist, insbesondere in Form einer Durchgangsöffnung, die sich in Führungsrichtung des Betätigungselementes (3) erstreckt.

5. Memory-Einrichtung nach Anspruch 3 oder 4, **dadurch gekennzeichnet, dass** die Führung (63) einen Hohlraum zur Aufnahme eines elastischen Elementes (36), insbesondere in Form einer Schraubenfeder, aufweist.

6. Memory-Einrichtung nach einem der Ansprüche 3 bis 5, **dadurch gekennzeichnet, dass** in der Führung (63) ein Betätigungselement (3) zur Betätigung der Verriegelungsvorrichtung (104) der ersten Memory-Baugruppe (104, 105) beweglich, insbesondere verschieblich, gelagert ist.

7. Memory-Einrichtung nach Anspruch 5 und 6, **dadurch gekennzeichnet, dass** das elastische Element (36) unter Vorspannung auf das Betätigungselement (3) einwirkt.

8. Memory-Einrichtung nach einem der vorhergehenden Ansprüche, **dadurch gekennzeichnet, dass** der Grundkörper (60) eine Führungsfläche (61) aufweist, entlang der ein Abschnitt der Verriegelungsvorrichtung (104) beim Anfahren der Memory-Position der Führungsschienen (1, 2) der Schienenlängsführung gleitet.

9. Memory-Einrichtung nach Anspruch 8, **dadurch gekennzeichnet, dass** mittels der Führungsfläche (61) ein Entriegeln der Verriegelungsvorrichtung (104) durch das Betätigungselement (3) vor dem Erreichen der Memory-Position verhindert wird.

10. Memory-Einrichtung nach einem der vorhergehenden Ansprüche, **dadurch gekennzeichnet, dass** der Grundkörper (60) zur formschlüssigen Befestigung an der zweiten Führungsschiene (2) ausgebildet ist.

11. Memory-Einrichtung nach Anspruch 10, **dadurch gekennzeichnet, dass** der Grundkörper (60) zur Befestigung an der zweiten Führungsschiene (2) mindestens ein einstückig angeformtes Formschlusselement (65) aufweist.

12. Memory-Einrichtung nach Anspruch 10 oder 11, **dadurch gekennzeichnet, dass** zur formschlüssigen Befestigung des Grundkörpers (60) an der zweiten Führungsschiene (2) mindestens ein Rastelement (65) vorgesehen ist.

13. Memory-Einrichtung nach Anspruch 12, **dadurch gekennzeichnet, dass** das Rastelement (65) als aufspreizbares Schnappelement ausgebildet ist, welches bevorzugt mittels eines Verriegelungsstiftes (66) aufspreizbar ist.

14. Memory-Einrichtung nach einem der Ansprüche 1 bis 10, **dadurch gekennzeichnet, dass** der Grundkörper (60) mindestens eine Befestigungsstelle aufweist, über die er durch separate Befestigungsmittel, z. B. in Form mindestens eines Nietes oder mindestens einer Schraube, an der zweiten Führungsschiene (2) befestigbar ist.

15. Memory-Einrichtung nach einem der vorhergehenden Ansprüche, **dadurch gekennzeichnet, dass** der Anschlag (602) der zweiten Memory-Baugruppe (6) durch ein separates, mit dem Grundkörper (60) verbundenes Bauteil (600) gebildet wird.

16. Memory-Einrichtung nach Anspruch 15, **dadurch gekennzeichnet, dass** das separate Bauteil (600) aus Metall, insbesondere aus Blech, besteht.

17. Memory-Einrichtung nach Anspruch 15 oder 16, **dadurch gekennzeichnet, dass** das separate Bauteil (600) formschlüssig mit dem Grundkörper (60) verbunden ist.

18. Memory-Einrichtung nach einem der Ansprüche 15 - 17, **dadurch gekennzeichnet, dass** das separate Bauteil (600) über einen Umgriff (601, 604) mit dem Grundkörper (60) verbunden ist.

19. Memory-Einrichtung nach Anspruch 3 und einem der Ansprüche 15 bis 18, **dadurch gekennzeichnet, dass** das separate Bauteil (600) eine Durchgangsöffnung (603) für das Betätigungselement (3) aufweist.

20. Sitzbaugruppe für eine Schienenlängsführung eines Kraftfahrzeugsitzes, die zwei längserstreckte, in Erstreckungsrichtung (L) zueinander verschiebliche Führungsschienen (1, 2) zur Einstellung der Sitzlängsposition aufweist, mit einer Memory-Einrichtung nach einem der vorhergehenden Ansprüche und mit einer Feststellvorrichtung (20) zur Arretierung der beiden Führungsschienen (1, 2) in einer Mehrzahl unterschiedlicher Sitzlängspositionen, die beweglich gelagerte Sperrelemente (25) aufweist, welche zum Arretieren der Schienenlängsführung einerseits und zum Entriegeln der Schienenlängsführung andererseits in unterschiedliche Positionen bringbar sind.

21. Sitzbaugruppe nach Anspruch 20, **dadurch gekennzeichnet, dass** die Feststellvorrichtung (20) an einer der beiden Führungsschienen (1, 2), insbesondere an der zweiten Führungsschiene (2), angeordnet ist.

22. Sitzbaugruppe nach Anspruch 20 oder 21, **dadurch gekennzeichnet, dass** zur Lagerung der Sperrelemente (25) mindestens ein Lagerblech (21, 22) vorgesehen ist.

23. Sitzbaugruppe nach Anspruch 22 mit einer Memory-Einrichtung nach Anspruch 3, **dadurch gekennzeichnet, dass** mindestens ein Lagerblech (21) eine Führung (21a), insbesondere in Form einer Führungsöffnung, für das Betätigungselement (3) aufweist.

24. Sitzbaugruppe nach einem der Ansprüche 20 bis 23, **dadurch gekennzeichnet, dass** die Sperrelemente (25) durch Verschieben bewegbar sind und vorzugsweise als Sperrzähne ausgebildet sind.

25. Sitzbaugruppe nach einem der Ansprüche 22 bis 24, **dadurch gekennzeichnet, dass** das mindestens eine Lagerblech (21, 22) als Führungsblech für die Sperrelemente (25) ausgebildet ist.

26. Sitzbaugruppe nach Anspruch 25, **dadurch gekennzeichnet, dass** die Feststellvorrichtung (20) zwei in Verschieberichtung der Sperrelemente (25) voneinander beabstandete Führungsbleche (21, 22) umfasst.

27. Sitzbaugruppe nach Anspruch 25 oder 26, **dadurch gekennzeichnet, dass** das mindestens eine Führungsblech (21, 22) Führungsöffnungen für die Sperrelemente (25) aufweist.

28. Sitzbaugruppe nach einem der Ansprüche 22 bis 27, **dadurch gekennzeichnet, dass** das mindestens eine Lagerblech (21, 22) an einer der Führungsschienen (1, 2), insbesondere der zweiten Führungsschiene (2), befestigt ist.

29. Sitzbaugruppe nach einem der Ansprüche 22 bis 28 mit einer Memory-Einrichtung nach einem der Ansprüche 15 bis 20, **dadurch gekennzeichnet, dass** sich das den Anschlag (602) der zweiten Memory-Baugruppe (6) bildende Bauteil (6) an mindestens einem Lagerblech (22) abstützt.

30. Sitzbaugruppe nach einem der Ansprüche 22 bis 29, **dadurch gekennzeichnet, dass** an mindestens einem Lagerblech (21) der Feststellvorrichtung (20) Betätigungsmittel (29) für die Sperrelemente (25) angeordnet sind.

31. Sitzbaugruppe nach einem der Ansprüche 22 bis 30, **dadurch gekennzeichnet, dass** mindestens ein Lagerblech (22) sich an einer zugeordneten Führungsschiene (2), insbesondere der zweiten Führungsschiene, der Schienenlängsführung abstützt.

32. Kraftfahrzeugsitz mit
- einem Sitzgestell (G),
- einer Rückenlehne (R), die schwenkbar an dem Sitzgestell (G) gelagert und aus ihrer Gebrauchsposition heraus in Richtung auf eine Sitzfläche des Sitzgestells (G) vorklappbar ist,
- einer Schienenlängsführung (1, 2), mit der das Sitzgestell (G) zur Einstellung der Sitzlängsposition in Schienenlängsrichtung (L) bewegbar ist,
- einer Feststellvorrichtung (20) zum Arretieren des Sitzgestells (G) in einer zuvor eingestellten Sitzlängsposition,
- einem Koppelmechanismus, über den die Feststellvorrichtung (20) mit der Rückenlehne (R) gekoppelt ist, so dass die Feststellvorrichtung (20) beim Vorklappen der Rückenlehne (R) in Richtung auf die Sitzfläche entriegelt wird,
- einer Memory-Einrichtung (104, 105, 107), mittels der das Sitzgestell bei einer Bewegung in Sitzlängsrichtung automatisch in einer einstellbaren, als Memory-Position definierten Sitzlängsposition angehalten werden kann,
- einer Verriegelungsvorrichtung (104, 107) der Memory-Einrichtung (104, 105, 107) zum Verriegeln einer eingestellten Memory-Position und
- Mitteln (202, 206), über die die Verriegelungsvorrichtung (104, 107) mit der Rückenlehne (R) gekoppelt ist,
**gekennzeichnet durch**
eine Memory-Einrichtung nach einem der Ansprüche 1 bis 19.

33. Kraftfahrzeugsitz nach Anspruch 32, **gekennzeichnet durch** eine Sitzbaugruppe nach einem der Ansprüche 20 bis 31.

## Claims

1. Memory device for a rail longitudinal guide of a motor vehicle seat which has two longitudinally extended guide rails (1, 2; 101, 102) displaceable relative to each other in the extension direction (L) for adjusting the seat longitudinal position with
- a first memory module (104, 105) which is displaceable for adjusting a memory position along one of the two guide rails (1, 2) in the extension direction (L) thereof and which has a locking device (104) for locking a set memory position, and
- a second memory module (6) which is mounted on the second of the two guide rails(1, 2) and which has a stop (602) which on reaching a relative position of the two guide rails (1, 2) which corresponds to the memory position enters into engagement with a counter stop of the first memory module (104, 105)
**characterised in that**
the second memory module (6) has a plastics base body (60) through which it is fixed on the second guide rail (2).

2. Memory device according to claim 1, **characterised in that** the base body (60) has at least one actuating element (3) and/or at least one actuating surface (61) for actuating the locking device (104) of the first memory module (104, 105).

3. Memory device according to claim 2. **characterised in that** the base body (60) has a guide (63) for an actuating element (3) provided for action on the locking device (104).

4. Memory device according to claim 3, **characterised in that** the guide (63) is formed integral on the base body (60), more particularly in the form of a through opening which extends in the guide direction of the actuating element (3).

5. Memory device according to claim 3 or 4, **characterised in that** the guide (63) has a hollow cavity for holding an elastic element (36), more particularly in the form of a coil spring.

6. Memory device according to one of claims 3 to 5, **characterised in that** an actuating element (3) for actuating the locking device (104) of the first memory module (104, 105) is mounted movable, more particularly displaceable in the guide (63).

7. Memory device according to claim 5 and 6, **characterised in that** the elastic element (36) acts under pretension on the actuating element (3).

8. Memory device according to one of the preceding claims, **characterised in that** the base body (60) has a guide face (61) along which a section of the locking device (104) slides on moving up to the memory position of the guide rails (1, 2) of the rail longitudinal guide.

9. Memory device according to claim 8, **characterised in that** an unlocking of the locking device (104) by the actuating element (3) before reaching the memory position is prevented by means of the guide face (61).

10. Memory device according to one of the preceding claims, **characterised in that** the base body (60) is designed for the positive fixing on the second guide rail (2).

11. Memory device according to claim 10, **characterised in that** the base body (60) has for fixing on the second guide rail (2) at least one integral moulded positive locking element (65).

12. Memory device according to claim 10 or 11, **characterised in that** for positive fixing of the base body (60) on the second guide rail (2) there is at least one detent element (65).

13. Memory device according to claim 12, **characterised in that** the detent element (65) is designed as an expandable snap fitting element which can preferably be expanded by means of a locking pin (66).

14. Memory device according to one of claims 1 to 10, **characterised in that** the base body (60) has at least one fixing point through which it can be fixed by separate fixing means, e.g. in the form of at least one rivet or at least one screw on the second guide rail (2).

15. Memory device according to one of the preceding claims, **characterised in that** the stop (602) of the second memory module (6) is formed by a separate component part (600) connected to the base body (60).

16. Memory device according to claim 15, **characterised in that** the separate component part (600) is made of metal, more particularly sheet metal.

17. Memory device according to claim 15 or 16, **characterised in that** the separate component part (600) is connected with keyed engagement to the base body (60).

18. Memory device according to one of claims 15 to 17, **characterised in that** the separate component part (600) is connected to the base body (60) through a flanged engagement (601, 604).

19. Memory device according to claim 3 and one of claims 15 to 18, **characterised in that** the separate component (600) has a through opening (603) for the actuating element (3).

20. Seat module for a rail longitudinal guide of a motor vehicle seat which has two longitudinally extended guide rails (1, 2) displaceable relative to each other in the extension direction (L) for setting the seat longitudinal position, with a memory device according to one of the preceding claims and with a fixing device (20) for locking the two guide rails (1, 2) in a number of different seat longitudinal positions which has movably mounted locking elements (25) which can be brought into different positions for locking the seat longitudinal guide on one side and for releasing the rail longitudinal guide on the other.

21. Seat module according to claim 20, **characterised in that** the fixing device (20) is mounted on one of the two guide rails (1, 2) more particularly on the second guide rail (2).

22. Seat module according to claim 20 or 21, **characterised in that** at least one bearing plate (21, 22) is provided for mounting the locking elements (25).

23. Seat module according to claim 22 with a memory device according to claim 3, **characterised in that** at least one bearing plate (21) has a guide (21a) more particularly in the form of a guide opening for the actuating element (3).

24. Seat module according to one of claims 20 to 23, **characterised in that** the locking elements (25) are movable through displacement and are preferably formed as locking teeth.

25. Seat module according to one of claims 22 to 24, **characterised in that** the at least one bearing plate (21, 22) is designed as a guide plate for the locking elements (25).

26. Seat module according to claim 25, **characterised in that** the fixing device (20) comprises two guide plates (21, 22) spaced from one another in the displacement direction of the locking elements (25).

27. Seat module according to claim 25 or 26, **characterised in that** the at least one guide plate (21, 22) has guide openings for the locking elements (25).

28. Seat module according to one of the claims 22 to 27, **characterised in that** the at least one bearing plate (21, 22) is fixed on one of the guide rails (1, 2) more particularly the second guide rail (2).

29. Seat module according to one of claims 22 to 28, with a memory device according to one of claims 15 to 20 **characterised in that** the component part (6) forming the stop (602) of the second memory module (6) is supported on at least one bearing plate (22).

30. Seat module according to one of claims 22 to 29, **characterised in that** actuating means (29) for the locking elements (25) are mounted on at least one bearing plate (21) of the fixing device (20).

31. Seat module according to one of claims 22 to 30, **characterised in that** at least one bearing plate (22) is supported on an associated guide rail (2), more particularly the second guide rail of the rail longitudinal guide.

32. Motor vehicle seat with
- a seat frame (G),
- a back rest (R) which is mounted for pivotal movement on the seat frame (G) and can be folded forwards from its useful position towards a seat surface of the seat frame (G),
- a rail longitudinal guide (1, 2) with which the seat frame (G) can be moved to set the seat longitudinal position in the rail longitudinal direction (L),
- a fixing device (20) for locking the seat frame (G) in a previously set seat longitudinal position,
- a coupling mechanism through which the fixing device (20) is coupled to the backrest (R) so that the fixing device (20) is released on folding the backrest (R) towards the seat surface,
- a memory device (104,105, 107) by means of which the seat frame on moving in the seat longitudinal direction can be automatically halted in an adjustable seat longitudinal position defined as the memory position,
- a locking device (104, 107) of the memory device (104, 105, 107) for locking a set memory position and
- means (202, 206) through which the locking device (104, 107) is coupled to the backrest (R),
**characterised by**
a memory device according to one of claims 1 to 19.

33. Motor vehicle seat according to claim 32, **characterised by** a seat module according to one of claims 20 to 31.

## Revendications

1. Dispositif à mémoire pour un dispositif de guidage longitudinal à glissières d'un siège de véhicule automobile, qui présente deux glissières de guidage (1,2 ; 101,102) d'étendue longitudinale, coulissant l'une par rapport à l'autre dans un sens de développement (L) et permettant le réglage de la position longitudinale du siège, avec
- un premier module à mémoire (104, 105), qui peut être coulissé le long d'une des deux glissières (1, 2) dans leur sens de développement (L) pour régler une position de mémoire et qui présente un dispositif de verrouillage (104) permettant le verrouillage d'une position de mémoire réglée, et
- un deuxième module à mémoire (6), qui est disposé sur la deuxième des deux glissières (1, 2) et qui présente une butée (602) qui vient en prise avec une contrebutée du premier module à mémoire (104, 105) lorsqu'une position relative des deux glissières (1, 2) correspondant à la position de mémoire est atteinte,
**caractérisé en ce que** le deuxième module à mémoire (6) présente un corps de base (60) en plastique par l'intermédiaire duquel il est fixé à la deuxième glissière (2).

2. Dispositif à mémoire selon la revendication 1, **caractérisé en ce que** le corps de base (60) présente au moins un élément d'actionnement (3) et/ou au moins une surface d'actionnement (61) permettant l'actionnement du dispositif de verrouillage (104) du premier module à mémoire (104,105).

3. Dispositif à mémoire selon la revendication 2, **caractérisé en ce que** le corps de base (60) présente un guidage (63) pour un élément d'actionnement (3) prévu pour agir sur le dispositif de verrouillage (104).

4. Dispositif à mémoire selon la revendication 3, **caractérisé en ce que** le guidage (63) est conçu d'un seul tenant sur le corps de base (60), en particulier sous la forme d'une ouverture de passage, qui s'étend dans le sens de guidage de l'élément d'actionnement (3).

5. Dispositif à mémoire selon la revendication 3 ou 4, **caractérisé en ce que** le guidage (63) présente une cavité permettant le logement d'un élément élastique (36), en particulier sous la forme d'un ressort hélicoïdal.

6. Dispositif à mémoire selon l'une des revendications 3 à 5, **caractérisé en ce qu'**un élément d'actionnement (3) permettant l'actionnement du dispositif de verrouillage (104) du premier module à mémoire (104,105) est logé dans le guidage (63) de façon mobile, en particulier de façon à pouvoir être déplacé.

7. Dispositif à mémoire selon la revendication 5 et 6, **caractérisé en ce que** l'élément élastique (36) agit sur l'élément d'actionnement (3) sous précontrainte.

8. Dispositif à mémoire selon l'une des revendications précédentes, **caractérisé en ce que** le corps de base (60) présente une surface de guidage (61), le long de laquelle une section du dispositif de verrouillage (104) glisse lors de l'approche de la position de mémoire des glissières (1,2) du dispositif de guidage longitudinal.

9. Dispositif à mémoire selon la revendication 8, **caractérisé en ce qu'**un déverrouillage du dispositif de verrouillage (104) par l'élément d'actionnement (3) est empêché au moyen de la surface de guidage (61) avant l'atteinte de la position de mémoire.

10. Dispositif à mémoire selon l'une des revendications précédentes, **caractérisé en ce que** le corps de base (60) est conçu pour une fixation en engagement positif à la deuxième glissière de guidage (2).

11. Dispositif à mémoire selon la revendication 10, **caractérisé en ce que** le corps de base (60) permettant la fixation à la deuxième glissière (2) présente au moins un élément à engagement positif (65) formé d'un seul tenant.

12. Dispositif à mémoire selon la revendication 10 ou 11, **caractérisé en ce qu'**au moins un élément d'encliquetage (65) est prévu pour la fixation en engagement positif du corps de base (60) à la deuxième glissière de guidage (2).

13. Dispositif à mémoire selon la revendication 12, **caractérisé en ce que** l'élément d'encliquetage (65) est conçu comme un élément à déclic pouvant être écarté, qui peut de préférence être écarté au moyen d'une goupille de verrouillage (66).

14. Dispositif à mémoire selon l'une des revendications 1 à 10, **caractérisé en ce que** le corps de base (60) présente au moins un point de fixation, par lequel il peut être fixé à la deuxième glissière de guidage (2) par des moyens de fixation séparés, par exemple ayant la forme d'au moins un rivet ou d'au moins une vis.

15. Dispositif à mémoire selon l'une des revendications précédentes, **caractérisé en ce que** la butée (602) du deuxième module à mémoire (6) est formée par un composant séparé (600), relié au corps de base (60).

16. Dispositif à mémoire selon la revendication 15, **caractérisé en ce que** le composant séparé (600) est réalisé en métal, en particulier en tôle.

17. Dispositif à mémoire selon la revendication 15 ou 16, **caractérisé en ce que** le composant séparé (600) est relié au corps de base (60) en engagement positif.

18. Dispositif à mémoire selon l'une des revendications 15-17, **caractérisé en ce que** le composant séparé (600) est relié au corps de base (60) par l'intermédiaire d'un serrage (601,604).

19. Dispositif à mémoire selon la revendication 3 et l'une des revendications 15 à 18, **caractérisé en ce que** le composant séparé (600) présente une ouverture de passage (603) pour l'élément d'actionnement (3).

20. Ensemble siège pour un dispositif de guidage longitudinal à glissières d'un siège de véhicule automobile, qui présente deux glissières de guidage (1,2) d'étendue longitudinale, coulissant l'une par rapport à l'autre dans un sens de développement (L) et permettant le réglage de la position longitudinale du siège, avec un dispositif à mémoire selon l'une des revendications précédentes et avec un dispositif de blocage (20) permettant le blocage des deux glissières de guidage (1, 2) dans une multitude de positions longitudinales de siège différentes, qui présente des éléments d'arrêt (25), qui peuvent être amenés dans différentes positions d'une part pour bloquer le dispositif de guidage longitudinal à glissières et d'autre pour déverrouiller le dispositif de guidage longitudinal à glissières.

21. Ensemble siège selon la revendication 20, **caractérisé en ce que** le dispositif de blocage (20) est disposé sur une des deux glissières de guidage (1,2), en particulier sur la deuxième glissière de guidage (2).

22. Ensemble siège selon la revendication 20 ou 21, **caractérisé en ce qu'**au moins une tôle de palier (21, 22) est prévue pour le logement des éléments d'arrêt (25).

23. Ensemble siège selon la revendication 22 avec un dispositif à mémoire selon la revendication 3, **caractérisé en ce qu'**au moins une tôle de palier (21) présente un guidage (21a), en particulier ayant la forme d'une ouverture de guidage, pour l'élément d'actionnement (3).

24. Ensemble siège selon l'une des revendications 20 à 23, **caractérisé en ce que** les éléments d'arrêt (25) peuvent être déplacés par coulissement et sont de préférence conçus comme des dents de blocage.

25. Ensemble siège selon l'une des revendications 22 à 24, **caractérisé en ce que** la au moins une tôle de palier (21, 22) est conçue comme une tôle de guidage pour les éléments d'arrêt (25).

26. Ensemble siège selon la revendication 25, **caractérisé en ce que** le dispositif de blocage (20) comprend deux tôles de guidage (21, 22) mutuellement distantes dans le sens de déplacement des éléments d'arrêt (25).

27. Ensemble siège selon la revendication 25 ou 26, **caractérisé en ce que** la au moins une tôle de guidage (21,22) présente des ouvertures de guidage pour les éléments d'arrêt (25).

28. Ensemble siège selon l'une des revendications 22 à 27, **caractérisé en ce que** la au moins une tôle de palier (21, 22) est fixée à une des glissières de guidage (1, 2), en particulier la deuxième glissière de guidage (2).

29. Ensemble siège selon l'une des revendications 22 à 28 avec un dispositif à mémoire selon l'une des revendications 15 à 20, **caractérisé en ce que** le composant (6) formant la butée (602) du deuxième module à mémoire (6) s'appuie contre au moins une tôle de palier (22).

30. Ensemble siège selon l'une des revendications 22 à 29, **caractérisé en ce que** des moyens d'actionnement (29) pour les éléments d'arrêt (25) sont disposés sur au moins une tôle de palier (21) du dispositif de blocage (20).

31. Ensemble siège selon l'une des revendications 22 à 30, **caractérisé en ce qu'**au moins une tôle de palier (22) s'appuie contre une glissière de guidage (2) associée, en particulier la deuxième glissière de guidage, du dispositif de guidage longitudinal à glissières.

32. Siège de véhicule avec
- une embase de siège (G),
- un dossier de siège (R), qui est monté sur l'embase de siège (G) de façon à pouvoir pivoter et peut être rabattu vers l'avant en direction de la surface d'assise de l'embase de siège (G) depuis sa position d'utilisation,
- un dispositif de guidage longitudinal à glissières (1, 2), avec lequel l'embase de siège (G) peut être déplacée dans le sens longitudinal de glissière (L) pour régler la position longitudinale du siège,
- un dispositif de blocage (20) pour bloquer l'embase de siège (G) dans une position longitudinale de siège préalablement réglée,
- un mécanisme d'accouplement via lequel le dispositif de blocage (20) est accouplé avec le dossier de siège (R), de sorte que le dispositif de blocage (20) est déverrouillé lorsque le dossier de siège (R) est rabattu vers l'avant en direction de la surface d'assise,
- un dispositif à mémoire (104, 105, 107), au moyen duquel l'embase de siège peut être arrêtée automatiquement dans une position longitudinale de siège réglable, définie comme position de mémoire, lors d'un mouvement dans le sens longitudinal de siège,
- un dispositif de verrouillage (104, 107) du dispositif à mémoire (104, 105, 107) pour verrouiller une position de mémoire réglée et
- des moyens (202, 206), par lesquels le dispositif de verrouillage (104, 107) est accouplé avec le dossier de siège (R),
**caractérisé par**
un dispositif à mémoire selon l'une des revendications 1 à 19.

33. Siège de véhicule automobile selon la revendication 32, **caractérisé par** un ensemble siège selon l'une des revendications 20 à 31.
